# EUROPEAN PATENT APPLICATION

(11) **EP 4 517 501 A1**
(43) Date of publication of application: **05.03.2025**
(21) Application number: 22941895.9
(22) Date of filing: 14.05.2022
(51) Int. Cl.: G06F 3/0482, G06F 3/04883, G06F 3/14

(54) **DISPLAY METHOD AND APPARATUS, AND VEHICLE**

(71) Applicant: Shenzhen Yinwang Intelligent Technologies Co., Ltd., Shenzhen, Guangdong 518129 (CN)
(72) Inventor: LI, Jinjin, Shenzhen, Guangdong 518129 (CN); HU, Liang, Shenzhen, Guangdong 518129 (CN); SONG, Xianxi, Shenzhen, Guangdong 518129 (CN); XU, Jie, Shenzhen, Guangdong 518129 (CN); YANG, Jinghuan, Shenzhen, Guangdong 518129 (CN)
(74) Representative: Maiwald GmbH
(86) International application number: PCT/CN2022/092903
(87) International publication number: WO 2023/220843

(57) **Abstract**

Embodiments of this application provide a display method and apparatus, and a vehicle. The method includes: displaying a first interface on a vehicle display; and when it is detected that a distance between a hand of a user and a first area on the vehicle display is less than or equal to a first preset distance, and/or when it is detected that a gaze of the user is in the first area, displaying one or more interface elements on the first interface, where the first interface includes the first area, and the first area includes a display area of the one or more interface elements. Embodiments of this application may be applied to a smart vehicle or an electric vehicle, to help improve human-machine interaction experience of the user.

## Description

### TECHNICAL FIELD

Embodiments of this application relate to the human-machine interaction field, and more specifically, to a display method and apparatus, and a vehicle.

### BACKGROUND

With rapid development of the automobile industry, aesthetics, a sense of technology, and user experience inside a cabin gradually become core competitiveness of a product. Due to limited space in the cabin, a vehicle display cannot be made very large. In a process in which a user uses the vehicle display, how to meet human-machine interaction experience of the user becomes a problem to be urgently resolved.

### SUMMARY

Embodiments of this application provide a display method and apparatus, and a vehicle, to help ensure driving safety and improve human-machine interaction experience of a user.

In embodiments of this application, a transportation means may include one or more different types of transportation tools or movable objects that are operated or moved on land (for example, a highway, a road, or a railway), on water (for example, a waterway, a river, or an ocean), or in the space. For example, the transportation means may include a car, a bicycle, a motorcycle, a train, a subway, an airplane, a ship, an aircraft, a robot, or another type of transportation tool or movable object. In the following method embodiments, an example in which an execution body is a vehicle is used for description.

According to a first aspect, a display method is provided. The method includes: displaying a first interface on a vehicle display; and when it is detected that a distance between a hand of a user and a first area on the vehicle display is less than or equal to a first preset distance, and/or when it is detected that a gaze of the user is in the first area, displaying one or more interface elements on the first interface, where the first interface includes the first area, and the first area includes a display area of the one or more interface elements.

In this embodiment of this application, when the user does not need to operate the one or more interface elements, the one or more interface elements may not be displayed on the first interface on the vehicle display. This prevents the one or more interface elements from blocking content displayed on the first interface, and further the user can view more display content on the first interface. For example, when the first interface is a navigation interface, the user can view more navigation content. This helps ensure driving safety. When the user needs to operate the one or more interface elements, the hand may approach the first area of the display and/or the gaze may be in the first area, so that the one or more interface elements are displayed on the first interface, and the user can conveniently operate the one or more interface elements. This helps improve human-machine interaction experience of the user. In some possible implementations, the displaying one or more interface elements on the first interface includes: automatically popping up the one or more interface elements on the first interface.

In some possible implementations, the detecting that a distance between a hand of a user and a first area on the vehicle display is less than or equal to a first preset distance includes: detecting that a distance between a finger of the user and the first area on the vehicle display is less than or equal to the first preset distance.

In some possible implementations, the first preset distance is greater than 0. For example, the first preset distance is 15 cm.

In this embodiment of this application, the first preset distance may be set as a critical point between a range in which the vehicle determines that the user needs to operate an interface element and a range in which the vehicle determines that the user does not need to operate the interface element. In this way, when it is detected that the distance between the hand of the user and the first area on the vehicle display is less than or equal to the first preset distance, the vehicle may display the one or more interface elements on the first interface, and the user can conveniently operate the one or more interface elements. When the distance between the hand of the user and the first area on the vehicle display is greater than the first preset distance, the vehicle may determine that the user does not need to perform an operation on an interface, and the one or more interface elements are not displayed on the first interface. This avoids blocking, due to popping up of the interface element when the distance between the hand and the first area is large, the content displayed on the first interface, and helps ensure driving safety.

In some possible implementations, the detecting that a distance between a hand of a user and a first area on the vehicle display is less than or equal to a first preset distance includes: detecting that the distance between the hand of the user and the first area on the vehicle display is less than or equal to the first preset distance and is greater than or equal to a fourth preset distance, where the fourth preset distance is less than the first preset distance.

In some possible implementations, the fourth preset distance is greater than 0. For example, the fourth preset distance is 8 cm.

In this embodiment of this application, the fourth preset distance may be set to be greater than 0 and less than the first preset distance. In this way, before the hand of the user touches the vehicle display, the one or more interface elements may be displayed on the first interface. Display of the one or more interface elements does not need to be triggered by tapping the vehicle display by using the finger of the user. This avoids complex operations of the user, and helps improve human-machine interaction experience of the user.

In some possible implementations, the detecting that a distance between a hand of a user and a first area on the vehicle display is less than or equal to a first preset distance includes: Duration in which it is detected that the distance between the hand of the user and the first area on the vehicle display is less than or equal to the first preset distance is greater than or equal to first preset duration.

The foregoing uses the vehicle display in the vehicle as an example for description. Technical solutions provided in the embodiment of this application may also be applied to a display in another transportation means.

The foregoing is described by using an example in which a type of the display is the vehicle display. The technical solutions provided in the embodiment of this application may be further applied to a projection display, for example, a head up display (head up display, HUD) apparatus. For example, the method includes: displaying a first virtual image on an HUD, where the first virtual image includes navigation image information; and when it is detected that a hand of a user approaches a windshield, displaying the first virtual image and a second virtual image on the HUD, where the second virtual image includes meter image information.

The first preset distance may be set by the user, or may be set when the vehicle is delivered from a factory; or the first preset distance may change with a system upgrade; or in a use process of the user, the vehicle may further set the first preset distance based on a use habit of the user.

With reference to the first aspect, in some implementations of the first aspect, the method further includes: when it is detected that the distance between the hand of the user and the first area is greater than or equal to a second preset distance, hiding the one or more interface elements on the first interface.

In embodiments of this application, when the user needs to operate the one or more interface elements, the hand may approach the first area on the display and/or the gaze may be in the first area, so that the one or more interface elements are displayed on the first interface, and the user can conveniently operate the one or more interface elements. When the user does not need to operate the one or more interface elements, the hand may be away from the first area, so that the one or more interface elements may be hidden on the vehicle display, to prevent the interface elements from blocking the content displayed on the first interface, and further the user can view more display content on the first interface. In this way, the one or more interface elements can be displayed or hidden on the vehicle display based on a requirement of the user, to help improve human-machine interaction experience of the user.

In some possible implementations, when it is detected that the distance between the hand of the user and the first area is greater than or equal to the second preset distance, and/or when it is detected that the gaze of the user is not in the first area, the one or more interface elements are hidden on the first interface.

In some possible implementations, the detecting that the distance between the hand of the user and the first area is greater than or equal to a second preset distance includes: detecting that duration in which the distance between the hand of the user and the first area is greater than or equal to the second preset distance is greater than or equal to second preset duration.

The first preset distance and the second preset distance may be equal or unequal. This is not specifically limited in embodiments of this application.

The second preset distance may be set by the user, or may be set when the vehicle is delivered from a factory; or the second preset distance may change with a system upgrade; or in a use process of the user, the vehicle may further set the second preset distance based on a use habit of the user.

With reference to the first aspect, in some implementations of the first aspect, that the displaying one or more interface elements on the first interface includes: when it is detected that the hand of the user approaches the vehicle display from a first side of the vehicle display, displaying the one or more interface elements in an area close to the first side on the first interface.

In this embodiment of this application, it is detected that the hand of the user approaches the vehicle display from the first side of the vehicle display, so that the one or more interface elements can be displayed in the area close to the first side on the first interface. This helps the user operate the one or more interface elements more conveniently, and this helps improve human-machine interaction experience of the user.

With reference to the first aspect, in some implementations of the first aspect, the method further includes: when it is detected that a distance between the hand of the user and a second area on the vehicle display is less than or equal to a third preset distance, expanding a size of a first interface element from a first size to a second size, where the one or more interface elements include the first interface element, the first interface includes the second area, and the second area includes a display area of the first interface element.

In this embodiment of this application, when it is detected that the distance between the hand of the user and the second area on the vehicle display is less than or equal to the third preset distance, the size of the first interface element may be expanded. In this way, after the size of the first interface element is expanded, the user can operate the first interface element more conveniently and accurately. This helps avoid an accidental touch performed by the user on another interface element due to a small size of an interface element or an excessively short distance between interface elements, and this helps improve human-machine interaction experience of the user.

In some possible implementations, the method further includes: when it is detected that the distance between the hand of the user and the second area on the vehicle display is greater than the third preset distance, restoring the size of the first interface element from the second size to the first size.

In some possible implementations, the first preset distance may be greater than the third preset distance.

In some possible implementations, if the one or more interface elements are one interface element, the first area and the second area may be a same area.

The third preset distance may be set by the user, or may be set when the vehicle is delivered from a factory; or the third preset distance may change with a system upgrade; or in a use process of the user, the vehicle may further set the third preset distance based on a use habit of the user.

With reference to the first aspect, in some implementations of the first aspect, the first interface includes a floating icon, the floating icon is associated with one or more applications, and the displaying one or more interface elements on the first interface includes: displaying icons of the one or more applications on the first interface.

In this embodiment of this application, when the user needs to view the one or more applications associated with the floating icon, the hand may approach the first area on the display and/or the gaze may be in the first area, so that the icons of the one or more applications associated with the floating icon are displayed on the first interface. This helps avoid complex operations of the user in a process of viewing the icons of the one or more applications associated with the floating icon, and improves efficiency of viewing the icons of the one or more applications by the user, to help improve human-machine interaction experience of the user.

With reference to the first aspect, in some implementations of the first aspect, the first interface is a display interface of a first application.

In this embodiment of this application, in a process in which the user views the display interface of the first application, if the user needs to operate the one or more interface elements, the hand may approach the first area on the display and/or the gaze may be in the first area, so that the one or more interface elements are displayed on the display interface of the first application, and the user can conveniently operate the one or more interface elements. When the user does not need to operate the one or more interface elements, the hand may be away from the first area, so that the one or more interface elements may be hidden on the vehicle display, to prevent the interface elements from blocking the content displayed on the display interface of the first application, and further the user can view more display content on the display interface of the first application.

In some possible implementations, the method further includes: in response to displaying the display interface of the first application, enabling an automatic interface element control function (for example, a function of automatically popping up or hiding an interface element), where when the automatic interface element control function is enabled and the distance between the hand of the user and the first area on the vehicle display is less than or equal to the first preset distance, the one or more interface elements can be displayed on the vehicle display.

In this embodiment of this application, when a display interface of an application is not displayed on the vehicle display (for example, a home screen is displayed on the vehicle display), the automatic interface element control function may be automatically disabled. In this way, the interface element may be always displayed on the vehicle display when the interface element does not block the display content. When the display interface of the first application is displayed on the vehicle display, the vehicle may automatically enable the automatic interface element control function. In this way, the one or more interface elements may be displayed or hidden on the vehicle display based on a requirement of the user. This helps improve human-machine interaction experience of the user. The automatic interface element control function may be automatically enabled or disabled based on different scenarios, and the user does not need to manually enable or disable the function. This helps improve automation of the vehicle.

With reference to the first aspect, in some implementations of the first aspect, the first application includes a navigation application, a video application, a music application, a game application, or the like.

In this embodiment of this application, when a display interface of the navigation application is displayed on the vehicle display, if the user needs to operate the one or more interface elements, the vehicle display may display the one or more interface elements on the display interface of the navigation application, so that the user can conveniently operate the one or more interface elements. When the user does not need to operate the one or more interface elements, the one or more interface elements may be hidden on the vehicle display. This prevents the interface element from blocking navigation content on the display interface of the navigation application, and further the user can view more navigation content on the display interface of the navigation application.

With reference to the first aspect, in some implementations of the first aspect, the one or more interface elements include a second interface element associated with a second application, and the method further includes: displaying the display interface of the first application and a display interface of the second application on the vehicle display when an operation of tapping the second interface element by the user is detected.

In this embodiment of this application, when an operation of tapping the second interface element by the user is detected, the display interface of the first application and the display interface of the second application are displayed on the vehicle display. This is convenient for the user to separately view the display interface of the second application and the display interface of the first application on the vehicle display.

With reference to the first aspect, in some implementations of the first aspect, the displaying the display interface of the first application and a display interface of the second application on the vehicle display when an operation of tapping the second interface element by the user is detected includes: when an operation of tapping the second interface element by a user located on a second side of the vehicle display is detected, displaying the display interface of the second application in a third area on the vehicle display, and displaying the display interface of the first application in a fourth area on the vehicle display, where the third area is an area close to the second side, and the fourth area is an area away from the second side.

In this embodiment of this application, when the operation of tapping the second interface element by the user located on the second side of the vehicle display is detected, a display interface of a newly started second application may be displayed in the area close to the second side, and a display interface of a previously started first application may be displayed in the area away from the second side. This is convenient for the user located on the second side of the vehicle display to view the display interface of the newly started second application, to help improve human-machine interaction experience of the user.

With reference to the first aspect, in some implementations of the first aspect, the method further includes: detecting that the user enables the automatic interface element control function, where when the automatic interface element control function is enabled and the distance between the hand of the user and the first area on the vehicle display is less than or equal to the first preset distance, the one or more interface elements can be displayed on the vehicle display.

In this embodiment of this application, the automatic interface element control function may be enabled or disabled based on a setting of the user. This is convenient for the user to choose, based on a requirement of the user, whether to enable the function.

With reference to the first aspect, in some implementations of the first aspect, the displaying one or more interface elements on the first interface includes: when a gesture of the user is detected, displaying the one or more interface elements corresponding to the gesture.

In this embodiment of this application, different gestures may be associated with different interface elements. When the gesture of the user is detected, the one or more interface elements corresponding to the gesture may be displayed on the first interface. In this way, when the user expects to view some interface elements, display of a corresponding interface element may be triggered by using a corresponding gesture. This avoids a process in which the user searches a plurality of interface elements for an interface element that the user expects to view. This helps improve human-machine interaction experience of the user.

With reference to the first aspect, in some implementations of the first aspect, the displaying a first interface on a vehicle display includes: displaying the first interface and a second interface on the vehicle display; and the method further includes: when it is detected that a distance between the hand of the user and a fifth area on the vehicle display is less than or equal to the first preset distance, and/or when it is detected that the gaze of the user is in the fifth area, displaying the one or more interface elements on the second interface, where the second interface includes the fifth area, and the fifth area includes a display area of the one or more interface elements.

In this embodiment of this application, the first interface and the second interface may be simultaneously displayed on the vehicle display. When it is detected that the hand of the user approaches the first area on the display and/or the gaze of the user is in the first area, the one or more interface elements may be displayed on the first interface. In this way, original display content may continue to be maintained on the second interface. This avoids impact of the one or more interfaces on display content on the second interface. When it is detected that the hand of the user approaches the fifth area and/or the gaze of the user is in the fifth area, the one or more interface elements may be displayed on the second interface. In this way, original display content may continue to be maintained on the first interface. This avoids impact of the one or more interfaces on the display content on the first interface.

With reference to the first aspect, in some implementations of the first aspect, the one or more interface elements include a widget and/or an icon of an application.

With reference to the first aspect, in some implementations of the first aspect, the method further includes: when an operation of tapping a sixth area by a finger of the user is detected, hiding the one or more interface elements on the first interface, where the sixth area is an area on the first interface other than the first area.

In this embodiment of this application, when a tap operation performed by the user on the area on the first interface other than the first area is detected, the one or more interface elements may be hidden. This prevents the one or more interface elements from blocking the display content on the first interface, and is also convenient for the user to view more display content on the first interface.

According to a second aspect, a display apparatus is provided. The display apparatus is located in a vehicle, and the display apparatus includes a display unit and a detection unit. The display unit is configured to display a first interface; and the display unit is further configured to: when the detection unit detects that a distance between a hand of a user and a first area of the display unit is less than or equal to a first preset distance, and/or when the detection unit detects that a gaze of the user is in the first area, display one or more interface elements on the first interface, where the first interface includes the first area, and the first area includes a display area of the one or more interface elements.

With reference to the second aspect, in some implementations of the second aspect, the display unit is configured to: when the detection unit detects that the distance between the hand of the user and the first area is greater than or equal to a second preset distance, hide the one or more interface elements on the first interface.

With reference to the second aspect, in some implementations of the second aspect, the display unit is specifically configured to: when the detection unit detects that the hand of the user approaches the display unit from a first side of the display unit, display the one or more interface elements in an area that is on the first interface and that is close to the first side.

With reference to the second aspect, in some implementations of the second aspect, the display unit is further configured to: when the detection unit detects that a distance between the hand of the user and a second area of the display unit is less than or equal to a third preset distance, expand a size of a first interface element from a first size to a second size, where the one or more interface elements include the first interface element, the first interface includes the second area, and the second area includes a display area of the first interface element.

With reference to the second aspect, in some implementations of the second aspect, the first interface includes a floating icon, the floating icon is associated with one or more applications, and the display unit is specifically configured to: display icons of the one or more applications on the first interface.

With reference to the second aspect, in some implementations of the second aspect, the first interface is a display interface of a first application.

With reference to the second aspect, in some implementations of the second aspect, the first application includes a navigation application.

With reference to the second aspect, in some implementations of the second aspect, the one or more interface elements include a second interface element associated with a second application, and the display unit is further configured to: display the display interface of the first application and a display interface of the second application when the detection unit detects an operation of tapping the second interface element by the user.

With reference to the second aspect, in some implementations of the second aspect, the display unit is specifically configured to: when the detection unit detects an operation of tapping the second interface element by a user located on a second side of the display unit, display the display interface of the second application in a third area, and display the display interface of the first application in a fourth area, where the third area is an area close to the second side, and the fourth area is an area away from the second side.

With reference to the second aspect, in some implementations of the second aspect, the detection unit is further configured to detect that the user enables an automatic interface element control function, where when the automatic interface element control function is enabled and the distance between the hand of the user and the first area is less than or equal to the first preset distance, the display unit can display the one or more interface elements.

With reference to the second aspect, in some implementations of the second aspect, the display unit is specifically configured to: when the detection unit detects a gesture of the user, display the one or more interface elements corresponding to the gesture.

With reference to the second aspect, in some implementations of the second aspect, the display unit is specifically configured to display the first interface and a second interface, where the display unit is further configured to: when the detection unit detects that a distance between the hand of the user and a fifth area of the display unit is less than or equal to the first preset distance, and/or when the detection unit detects that the gaze of the user is in the fifth area, display the one or more interface elements on the second interface, where the second interface includes the fifth area, and the fifth area includes a display area of the one or more interface elements.

With reference to the second aspect, in some implementations of the second aspect, the one or more interface elements include a widget and/or an icon of an application.

With reference to the second aspect, in some implementations of the second aspect, the display unit is further configured to: when the detection unit detects an operation of tapping a sixth area by a finger of the user, hide the one or more interface elements on the first interface, where the sixth area is an area on the first interface other than the first area.

According to a third aspect, an apparatus is provided. The apparatus includes a processing unit and a storage unit. The storage unit is configured to store instructions, and the processing unit executes the instructions stored in the storage unit, so that the apparatus performs the method in any possible implementation of the first aspect.

Optionally, the processing unit may include at least one processor, and the storage unit may be a memory. The memory may be a storage unit (for example, a register or a cache) in a chip, or may be a storage unit (for example, a read-only memory, or a random access memory) located outside the chip in a transportation means.

According to a fourth aspect, a transportation means is provided. The transportation means includes the apparatus according to either of the second aspect or the third aspect.

With reference to the fourth aspect, in some implementations of the fourth aspect, the transportation means is a vehicle.

According to a fifth aspect, a computer program product is provided. The computer program product includes computer program code, and when the computer program code is run on a computer, the computer is enabled to perform any possible method according to the first aspect.

It should be noted that all or some of the computer program code may be stored in a first storage medium. The first storage medium may be packaged together with a processor, or may be packaged separately from a processor. This is not specifically limited in embodiments of this application.

According to a sixth aspect, a computer-readable medium is provided. The computer-readable medium stores program code, and when the computer program code is run on a computer, the computer is enabled to perform any possible method according to the first aspect.

According to a seventh aspect, an embodiment of this application provides a chip system. The chip system includes a processor configured to invoke a computer program or computer instructions stored in a memory, so that the processor performs any possible method according to the first aspect.

With reference to the seventh aspect, in a possible implementation, the processor is coupled to the memory through an interface.

With reference to the seventh aspect, in a possible implementation, the chip system further includes the memory. The memory stores the computer program or computer instructions.

According to an eighth aspect, a control apparatus is provided. The control apparatus includes at least one processor and an interface circuit. The processor communicates with a display apparatus through the interface circuit. The at least one processor is configured to perform any possible method according to the first aspect, to control a display interface of the display apparatus.

In some possible implementations, the display apparatus is a vehicle display.

In this embodiment of this application, when a user needs to operate one or more interface elements, a hand may approach a first area of the display and/or a gaze may be in the first area, so that the one or more interface elements are displayed on a first interface, and the user can conveniently operate the one or more interface elements. This helps improve human-machine interaction experience of the user.

When the user does not need to operate the one or more interface elements, the hand may be away from the first area, so that the one or more interface elements may be hidden on the vehicle display, to prevent the interface elements from blocking display content on the first interface, and further the user can view more display content on the first interface. In this way, the one or more interface elements can be displayed or hidden on the vehicle display based on a requirement of the user, to help improve human-machine interaction experience of the user.

The one or more interface elements are displayed in an area close to a first side on the first interface. This helps the user operate the one or more interface elements more conveniently, and helps improve human-machine interaction experience of the user.

When it is detected that a distance between a hand of the user and a second area on the vehicle display is less than or equal to a third preset distance, a size of a first interface element may be expanded. The user can operate the first interface element more conveniently and accurately. This helps avoid an accidental touch performed by the user on another interface element due to a small size of an interface element or an excessively short distance between interface elements. This helps improve human-machine interaction experience of the user.

An automatic interface element control function is automatically enabled or disabled by determining the display content on the first interface, and the user does not need to manually enable or disable the function. This helps improve automation of a vehicle.

A display interface of a newly started second application may be displayed in an area close to a second side, and a display interface of a previously started first application may be displayed in an area away from the second side. This is convenient for a user located on the second side of the vehicle display to view the display interface of the newly started second application, to help improve human-machine interaction experience of the user.

Display of a corresponding interface element may be triggered by using a corresponding gesture. This avoids a process in which the user searches a plurality of interface elements for an interface element that the user expects to view. This helps improve human-machine interaction experience of the user.

When the first interface and a second interface are displayed on the vehicle display, the one or more interface elements may be displayed on the first interface by detecting that the hand of the user approaches the first area on the display and/or the gaze of the user is in the first area. This avoids impact of the one or more interface elements on display content on the second interface.

### BRIEF DESCRIPTION OF DRAWINGS

FIG. 1 is a functional block diagram of a vehicle according to an embodiment of this application;
FIG. 2 shows a graphical user interface GUI according to an embodiment of this application;
FIG. 3(a) to FIG. 3(c) show a group of GUIs according to an embodiment of this application;
FIG. 4(a) and FIG. 4(b) show another group of GUIs according to an embodiment of this application;
FIG. 5(a) and FIG. 5(b) show another group of GUIs according to an embodiment of this application;
FIG. 6(a) and FIG. 6(b) show another group of GUIs according to an embodiment of this application;
FIG. 7(a) and FIG. 7(b) show another group of GUIs according to an embodiment of this application;
FIG. 8(a) to FIG. 8(c) show another group of GUIs according to an embodiment of this application;
FIG. 9(a) and FIG. 9(b) show another group of GUIs according to an embodiment of this application;
FIG. 10(a) and FIG. 10(b) show another group of GUIs according to an embodiment of this application;
FIG. 11(a) to FIG. 11(c) show another group of GUIs according to an embodiment of this application;
FIG. 12(a) and FIG. 12(b) show another group of GUIs according to an embodiment of this application;
FIG. 13(a) and FIG. 13(b) show another group of GUIs according to an embodiment of this application;
FIG. 14(a) to FIG. 14(c) show another group of GUIs according to an embodiment of this application;
FIG. 15(a) to FIG. 15(f) show another group of GUIs according to an embodiment of this application;
FIG. 16(a) and FIG. 16(b) show another group of GUIs according to an embodiment of this application;
FIG. 17(a) to FIG. 17(c) show another group of GUIs according to an embodiment of this application;
FIG. 18(a) to FIG. 18(e) show another group of GUIs according to an embodiment of this application;
FIG. 19 is a schematic flowchart of a display method according to an embodiment of this application;
FIG. 20 is another schematic flowchart of a display method according to an embodiment of this application;
FIG. 21(a) and FIG. 21(b) show another group of GUIs according to an embodiment of this application;
FIG. 22(a) and FIG. 22(b) show another group of GUIs according to an embodiment of this application; and
FIG. 23 is a block diagram of a display apparatus according to an embodiment of this application.

### DESCRIPTION OF EMBODIMENTS

The following describes the technical solutions in embodiments of this application with reference to the accompanying drawings in embodiments of this application. In description in embodiments of this application, unless otherwise specified, "/" indicates "or". For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. Use of prefixes such as ordinal numbers used to distinguish the described objects in embodiments of this application does not constitute a limitation on the described objects. For description of the described objects, refer to the context description in claims or embodiments, and the use of such prefixes should not constitute a redundant limitation. In addition, in description of embodiments, unless otherwise specified, "a plurality of" means two or more.

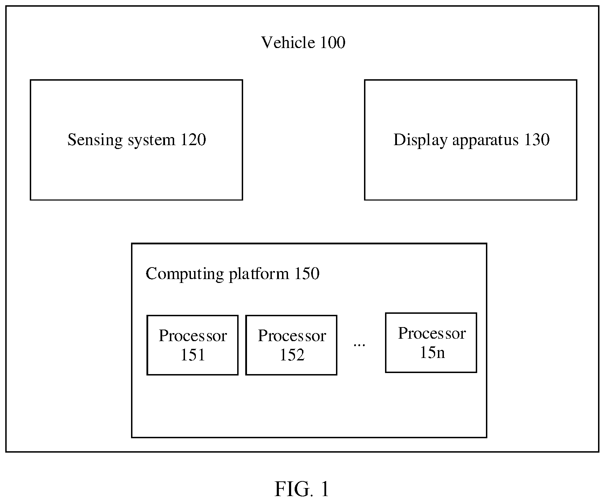

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense and measure information about an environment around the vehicle 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of an eye tracker, a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to execute the instructions, so as to implement corresponding functions.

The display apparatus 130 in a cabin is mainly classified into two types: A first type is a vehicle display, and a second type is a projection display. The vehicle display is a physical display, and is an important part of an in-vehicle infotainment system. A plurality of displays may be disposed in the cabin, for example, a digital instrument display, a central control screen, a display in front of a passenger (also referred to as a front-row passenger) in a co-driver seat, a display in front of a passenger in a left back row, and a display in front of a passenger in a right back row, and even a vehicle window may also be used as a display for display. A head-up display is also referred to as a head-up display system, which is mainly configured to display driving information such as a speed and navigation on a display device (for example, a windshield) in front of a driver, to reduce gaze transfer time of the driver, avoid a pupil change caused by a gaze transfer of the driver, and improve driving safety and comfort. The HUD may include a combiner-HUD (combiner-HUD, C-HUD) system, a windshield-HUD (windshield-HUD, W-HUD) system, and an augmented reality HUD (augmented reality HUD, AR-HUD) system.

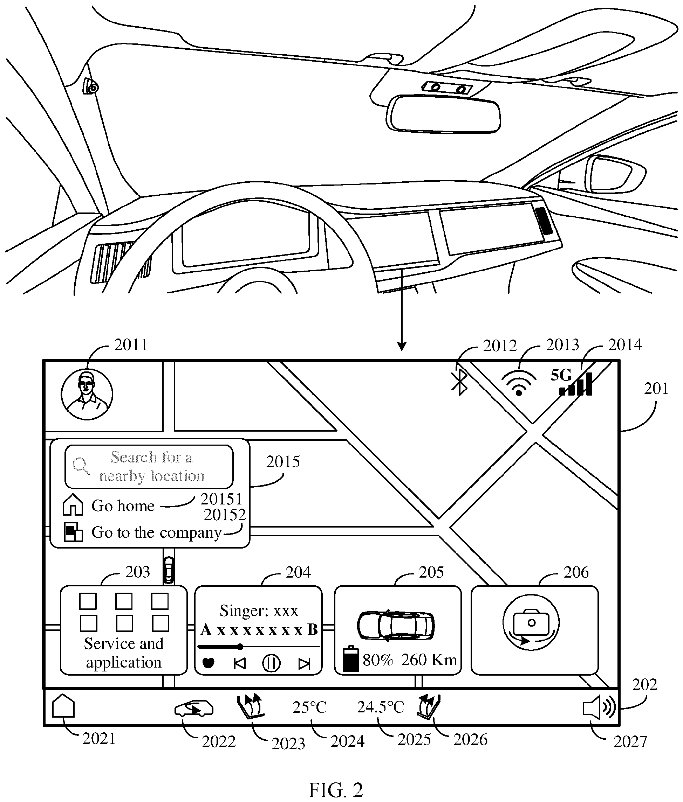

FIG. 2 shows a graphical user interface (graphical user interface, GUI) according to an embodiment of this application.

A vehicle display includes a content display area 201 and a function bar 202. As shown in FIG. 2, a navigation interface of an in-vehicle map application is currently displayed in the content display area 201. The navigation interface includes profile picture information 2011 of a logged-in user account on a vehicle, a Bluetooth function icon 2012, a Wi-Fi function icon 2013, a cellular network signal icon 2014, an in-vehicle map application search box 2015, a widget 203 corresponding to Service and application, a widget 204 corresponding to an in-vehicle music application, a widget 205 corresponding to a state of charge and a remaining driving mileage of the vehicle, and a widget 206 corresponding to a 360-degree (°) surround view function of the vehicle. The in-vehicle map application search box 2015 may include a "Go home" control 20151 and a "Go to the company" control 20152 that are set by a user. The function bar 202 includes an icon 2021 for switching to a display home screen, a vehicle internal circulation icon 2022, and a driver seat heating function icon 2023, a driver-area air conditioner temperature display icon 2024, a co-driver-area air conditioner temperature display icon 2025, a co-driver seat heating function icon 2026, and a volume setting icon 2027.

A widget in embodiments of this application may be understood as a type of an interface element.

The widget may be associated with some applications installed on the vehicle. For example, the widget 204 may be associated with the in-vehicle music application. The widget 204 may display a singer name and lyrics information corresponding to a piece of music, a playback progress bar, a like control, a control for switching to playing a previous piece of music, a pause/play control, a control for switching to playing a next piece of music, and the like. When the vehicle detects an operation of tapping the widget 204 by the user, the vehicle may display a display interface of the in-vehicle music application in the content display area 201.

Text information (for example, the singer name and the lyrics information) and control information (for example, the playback progress bar and the like control) displayed in the widget 204 may be set by the user. For example, the user may further set that only two pieces of information, namely, the lyrics information and the playback progress bar, are displayed in the widget 204.

The widget 204 may display the text information and the control information, or may display only an icon of an application. For example, the widget 204 may display only an icon of the in-vehicle music application.

The widget may be further associated with some local functions of the vehicle. For example, the widget 205 may be associated with information about the state of charge of the vehicle and an endurance mileage corresponding to the state of charge. When the vehicle detects an operation of tapping the widget 205 by the user, the vehicle may display, in the content display area 201, a display interface of the state of charge of the vehicle and the endurance mileage corresponding to the state of charge. For another example, the widget 206 may be associated with the 360-degree surround view function of the vehicle. When the vehicle detects an operation of tapping the widget 206 by the user, the vehicle may display a display interface of a 360-degree surround view in the content display area 201.

The widget may be further associated with a display interface of some functions of an application. For example, the widget may be associated with a payment function of a payment application. When the vehicle detects that the user taps the widget, the vehicle may not display a home page of the payment application, but directly display a display interface associated with the payment function of the payment application.

The widget may be further associated with a display list of a plurality of applications. For example, the widget 203 may be associated with a display list of a plurality of applications. When the vehicle detects an operation of tapping the widget 203 by the user, the vehicle may display, in the content display area 201, display interfaces of the plurality of applications installed on the vehicle.

The widgets 203 to 206 may be displayed in the content display area 201 based on a setting of the user. For example, the user may edit, based on a setting function, a widget that the user expects to display in the content display area 201. Alternatively, the widgets 203 to 206 may be set when the vehicle is delivered from a factory, and the user cannot edit the widgets 203 to 206.

The four widgets 203 to 206 are merely used as an example for description in the content display area 201. The content display area 201 may alternatively include more or fewer widgets. This is not limited in embodiments of this application.

As described above, some interface elements currently displayed on the vehicle display are fixedly arranged and occupy specific imaging space. However, in a driving process, these interface elements are not used by the user in real time. If display content that the user expects to see on the display is blocked by these interface elements, the user sees less display content, affecting driving safety and user experience. For example, in a process of driving the vehicle, the user expects to see the navigation interface displayed in the content display area 201, and the user may not operate the widgets 203 to 206 in the process. If the widgets 203 to 206 are always displayed on the navigation interface, some navigation content on the navigation interface is blocked by the widgets 203 to 206, resulting in a waste of display resources. In addition, the user sees less navigation content, affecting a navigation process of the user and further affecting driving safety of the user.

Embodiments of this application provide a display method and apparatus, and a transportation means. When the user needs to operate one or more interface elements, a hand may approach a first area of a display and/or a gaze may be in the first area, so that the one or more interface elements are displayed on a first interface, and the user can conveniently operate the one or more interface elements. When the user does not need to operate the one or more interface elements, the hand may be away from the first area and/or the gaze may not be in the first area, so that the one or more interface elements may be hidden on the vehicle display, to prevent the interface elements from blocking content displayed on the first interface, and further the user can view more display content on the first interface. In this way, the one or more interface elements can be displayed or hidden on the vehicle display based on a requirement of the user, to help improve human-machine interaction experience of the user.

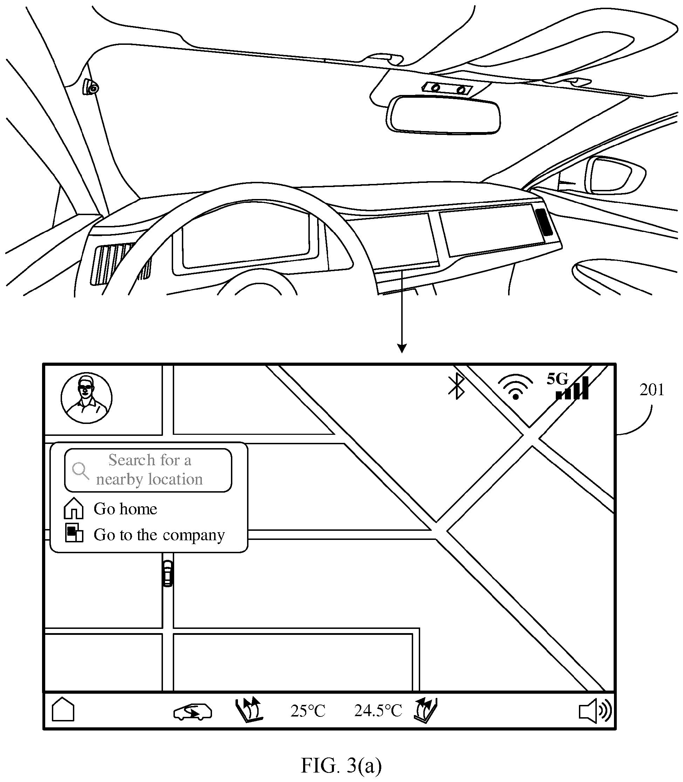

FIG. 3(a) to FIG. 3(c) show a group of GUIs according to an embodiment of this application.

As shown in FIG. 3(a), when detecting, by using a sensor, that a user does not interact with a display, a vehicle may display a navigation interface in the content display area 201, and not display the widgets 203 to 206. In this way, because the widgets 203 to 206 are hidden, the user sees more navigation content in the content display area 201.

In an embodiment, that the vehicle detects, by using the sensor, that the user does not interact with the display includes: The vehicle detects that a distance between a hand of the user and the display is greater than a first preset distance; the vehicle detects that a gaze of the user is not on the display; or the vehicle does not detect a voice instruction that is sent by the user and that indicates a widget to pop up. For example, the first preset distance may be 10 centimeters (centimeters, cm).

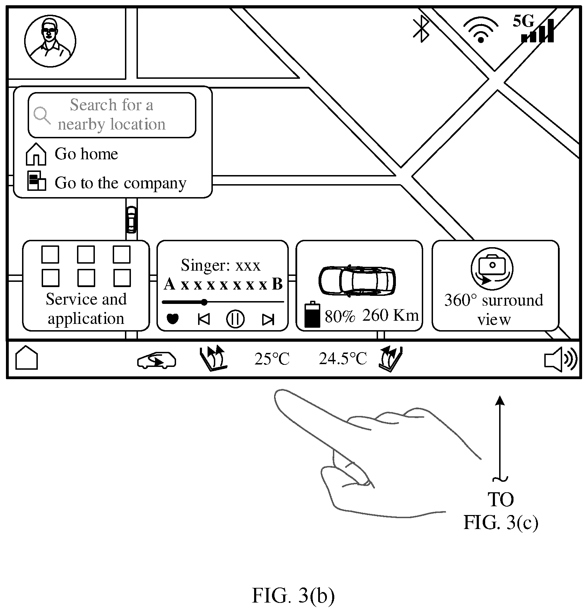

As shown in FIG. 3(b), when detecting, by using the sensor, that the hand of the user approaches the display, the vehicle may automatically pop up the widgets 203 to 206 on the navigation interface.

In an embodiment, that the vehicle detects, by using the sensor, that the hand of the user approaches the display includes: detecting that the distance between the hand of the user and the display is less than or equal to the first preset distance.

In an embodiment, the vehicle may provide the user with different display modes on the navigation interface, for example, a display mode 1, a display mode 2, and a display mode 3.

For example, in the display mode 1, if the vehicle detects that the user does not interact with the display, the widgets 203 to 206, the profile picture information 2011 of the user account, the Bluetooth function icon 2012, the Wi-Fi function icon 2013, the cellular network signal icon 2014, and the in-vehicle map application search box 2015 may all be automatically hidden. When it is detected that the hand of the user approaches the display, the widgets 203 to 206, the profile picture information 2011 of the user account, the Bluetooth function icon 2012, the Wi-Fi function icon 2013, the cellular network signal icon 2014, and the in-vehicle map application search box 2015 may be automatically popped up.

For another example, in the display mode 2, if the vehicle detects that the user does not interact with the display, the widgets 203 to 206 and the in-vehicle map application search box 2015 may be automatically hidden, but the profile picture information 2011 of the user account, the Bluetooth function icon 2012, the Wi-Fi function icon 2013, and the cellular network signal icon 2014 may be always displayed on the navigation interface. When it is detected that the hand of the user approaches the display, the widgets 203 to 206 and the in-vehicle map application search box 2015 may be automatically popped up.

For another example, in the display mode 3, if the vehicle detects that the user does not interact with the display, the widgets 203 to 206 are automatically hidden, but the profile picture information 2011 of the user account, the Bluetooth function icon 2012, the Wi-Fi function icon 2013, the cellular network signal icon 2014, and the in-vehicle map application search box 2015 may be always displayed on the navigation interface. When it is detected that the hand of the user approaches the display, the widgets 203 to 206 may be automatically popped up.

It should be understood that the display mode 1, the display mode 2, and the display mode 3 are merely examples, and embodiments of this application are not limited thereto. More or fewer display modes may alternatively be obtained through division on the navigation interface. In the following embodiment, the display mode 3 is used as an example for description.

It should be further understood that the foregoing is described by using an example in which different display modes are obtained through division on the navigation interface. In this embodiment of this application, different display modes may be obtained through division based on display interfaces of different applications, and types or quantities of automatically popped-up or hidden interface elements in different display modes may be different. The types or quantities of automatically popped-up or hidden interface elements in different modes may alternatively be determined based on settings of the user.

In an embodiment, the detecting that the distance between the hand of the user and the display is less than or equal to the first preset distance includes: detecting that a distance between the hand of the user and a first area on the display is less than or equal to the first preset distance.

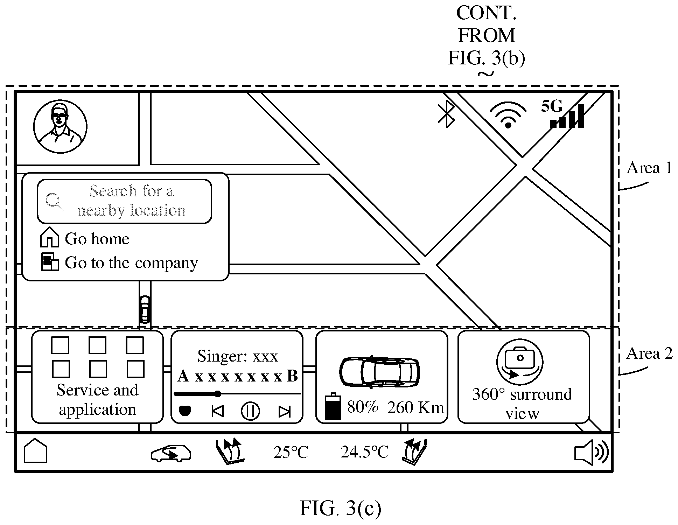

As shown in FIG. 3(c), the content display area may be divided into an area 1 and an area 2, and the widgets 203 to 206 may be located in the area 2.

In an embodiment, the first area may be a display area of the navigation interface; the first area may be a display area of the widgets 203 to 206; the first area may be the area 2 shown in FIG. 3(c); or in consideration of an error during detection of the first area, the first area may be an area larger than the area 2. For example, the first area may be an area obtained after the area 2 is expanded by a preset multiple (for example, 1.1 times). For another example, the first area may be an area obtained after the area 2 separately extends outward by 2 cm in a height direction and a width direction. In this way, when the distance between the hand and the first area is detected, a specific detection error can be ensured, so that the display can more easily trigger automatic popping up of one or more interface elements.

FIG. 3(b) is described merely by using an example in which the hand of the user approaches the display from a down side of the display. Embodiments of this application are not limited thereto. For example, when the hand of the user approaches the display from a left side of the display, the widgets 203 to 206 may be automatically popped up and displayed in the content display area 201; or when the hand of the user approaches the display from a right side of the display, the widgets 203 to 206 may be automatically popped up and displayed in the content display area 201.

It should be understood that an example in which the hand approaches the display to trigger automatic popping up of the widgets 203 to 206 on the navigation interface is used for description in FIG. 3(a) to FIG. 3(c). Embodiments of this application are not limited thereto. Alternatively, automatic popping up of the widgets 203 to 206 on the navigation interface may be triggered by using a voice instruction. For example, when the vehicle detects a voice instruction "display a widget" of the user, the widgets 203 to 206 may be automatically popped up on the display. Alternatively, automatic popping up of the widgets 203 to 206 on the navigation interface may be triggered by detecting whether the gaze of the user is in the first area. For example, when the vehicle detects, by using a camera or an eye tracker, that the gaze of the user is in the first area, the widgets 203 to 206 may be automatically popped up on the display.

It should be further understood that the vehicle may further trigger, by combining one or more of the distance between the hand and the display, the voice instruction, or the gaze of the user, automatic popping up or hiding of the widgets 203 to 206 on the navigation interface. For example, when it is detected that the hand of the user approaches the first area on the display and it is detected that the gaze of the user is in the first area, the widgets 203 to 206 may be automatically popped up on the display. In the following embodiments, whether to automatically pop up or hide an interface element may also be determined by combining the one or more of the distance between the hand and the display, the voice instruction, or the gaze of the user.

It should be further understood that the detecting that the hand of the user approaches the first area on the display includes: detecting that a finger of the user approaches the first area on the display. In the following embodiments, the finger of the user is used as an example for description. Embodiments of this application are not limited thereto. For example, the hand of the user may alternatively be a palm of the user or a back of the hand of the user.

In an embodiment, the detecting that the distance between the hand of the user and the first area on the vehicle display is less than or equal to the first preset distance includes: detecting that the distance between the hand of the user and the first area on the vehicle display is less than or equal to the first preset distance and is greater than or equal to a fourth preset distance, where the fourth preset distance is less than the first preset distance. For example, the fourth preset distance is 8 cm.

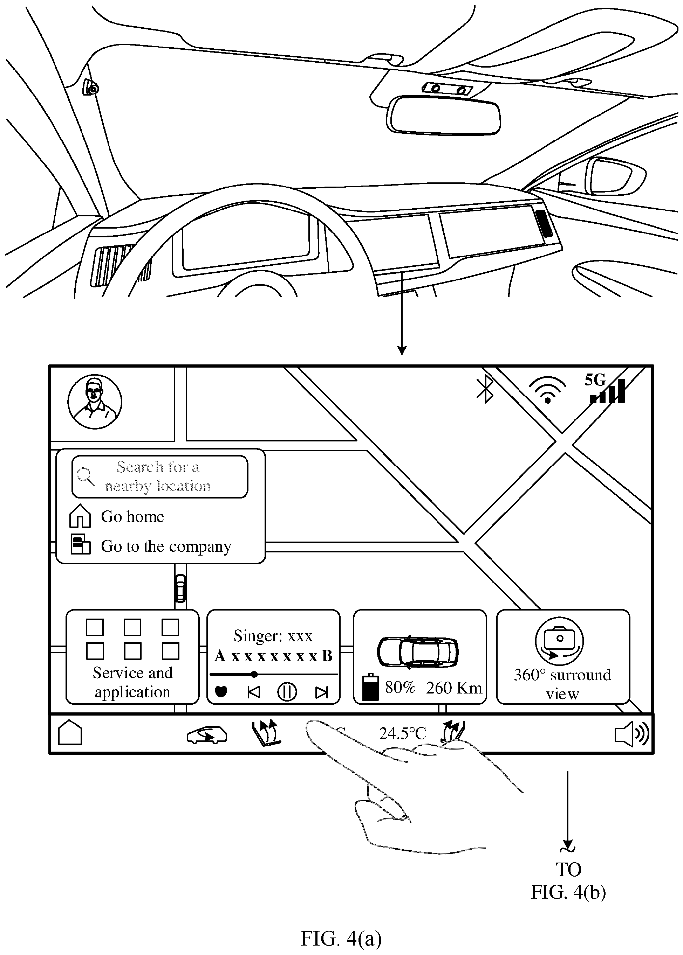

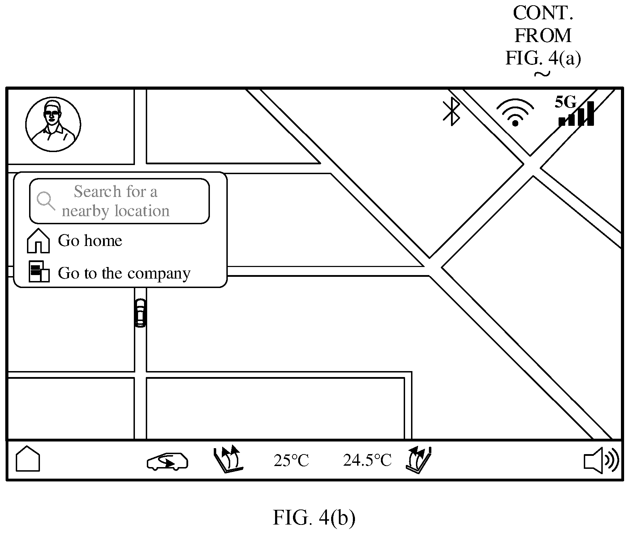

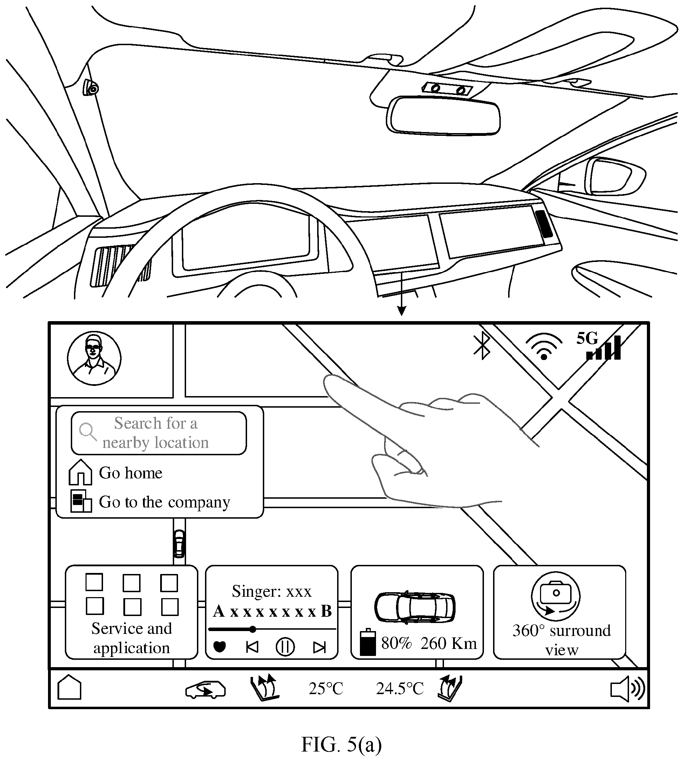

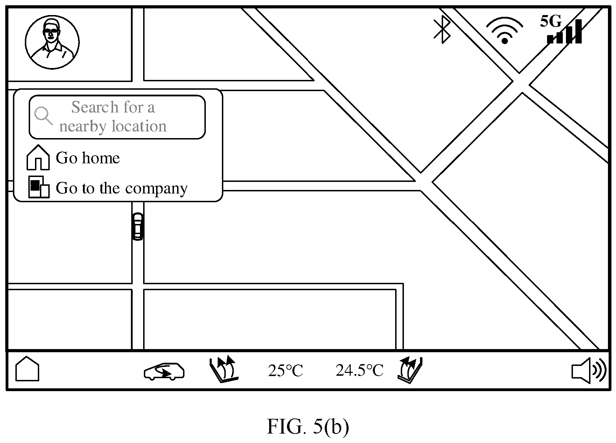

The foregoing describes, with reference to FIG. 3(a) to FIG. 3(c), a process of automatically popping up the widgets 203 to 206 on the display. The following describes, with reference to FIG. 4(a) and FIG. 4(b) and FIG. 5(a) and FIG. 5(b), a process of automatically hiding the widgets 203 to 206 on the display.

FIG. 4(a) and FIG. 4(b) show another group of GUIs according to an embodiment of this application.

As shown in FIG. 4(a), when a vehicle detects that a finger of a user approaches a display, the vehicle may control the display to display the widgets 203 to 206 in a content display area. When the vehicle detects that the finger of the user approaches the display and does not interact with the display, the vehicle may continue to display the widgets 203 to 206 on the display. When detecting that the finger of the user moves away from the display from a location close to the display (for example, the finger moves downwards to be away from the display), the vehicle may display a GUI shown in FIG. 4(b) on the display.

As shown in FIG. 4(b), in response to detecting that the finger of the user moves away from the display from the location close to the display, the vehicle may automatically hide the widgets 203 to 206 on the display. In this way, when the finger of the user is away from the display, the vehicle may determine that the user does not expect to operate the widgets 203 to 206, and hide the widgets 203 to 206, so that the user sees more navigation content on the display.

In an embodiment, that the vehicle detects that the finger of the user moves away from the display from the location close to the display includes: The vehicle detects that a distance between the finger of the user and a first area on the display changes from less than or equal to a first preset distance to greater than or equal to a second preset distance.

In embodiments of this application, the first preset distance and the second preset distance may be equal or unequal.

In an embodiment, the second preset distance may be greater than the first preset distance. For example, the second preset distance may be 15 cm.

In an embodiment, if the first preset distance is equal to the second preset distance, when it is detected that the distance between the finger of the user and the first area is less than or equal to the first preset distance, the widgets 203 to 206 may be automatically popped up on a navigation interface. When it is detected that the distance between the finger of the user and the first area is greater than the second preset distance, the widgets 203 to 206 may be automatically hidden on the navigation interface.

FIG. 5(a) and FIG. 5(b) show another group of GUIs according to an embodiment of this application.

As shown in FIG. 5(a), when detecting that a finger of a user approaches a display, a vehicle may automatically pop up the widgets 203 to 206 in a content display area. When the vehicle detects that the finger of the user approaches the display and does not interact with the display, the vehicle may continue to display the widgets 203 to 206 on the display. When the vehicle detects a tap operation performed by the finger of the user in a display area other than a display area of the widgets 203 to 206, the vehicle may display, on the display, a GUI shown in FIG. 5(b).

As shown in FIG. 5(b), in response to detecting the tap operation performed by the finger of the user in the display area other than the display area of the widgets 203 to 206, the vehicle may hide the widgets 203 to 206 on the display. In this way, when the vehicle detects an operation performed by the user in a non-widget display area, the vehicle may determine that the user does not expect to operate the widgets 203 to 206, and hide the widgets 203 to 206, so that the user sees more navigation content in the content display area.

In an embodiment, as shown in FIG. 3(c), the content display area may be divided into the area 1 and the area 2, and the widgets 203 to 206 may be located in the area 2. That the vehicle detects the tap operation performed by the finger of the user in the display area other than the display area of the widgets 203 to 206 includes: The vehicle detects a tap operation performed by the user in the area 1.

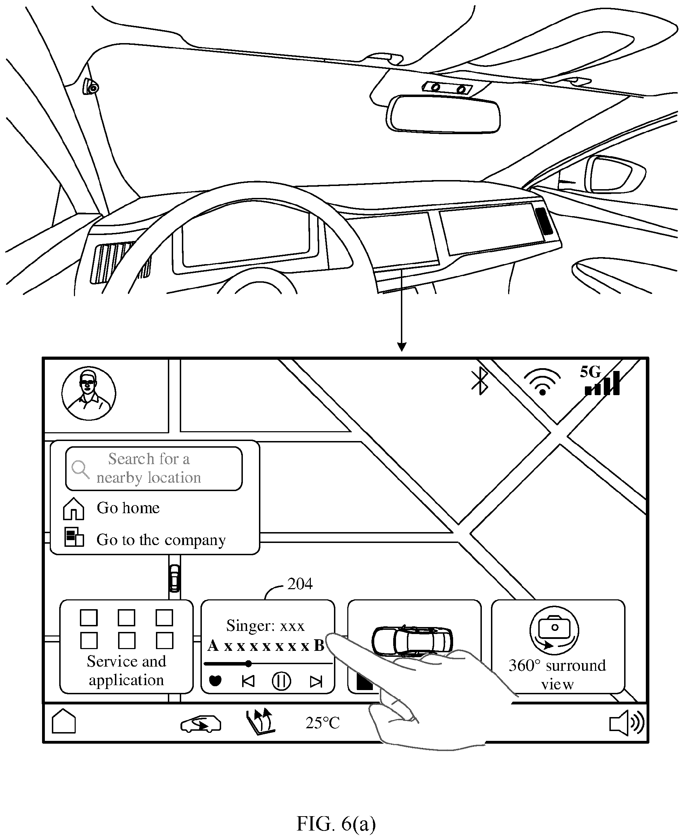

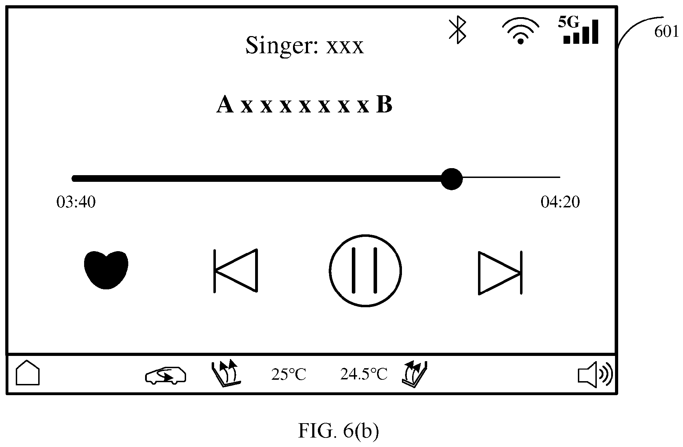

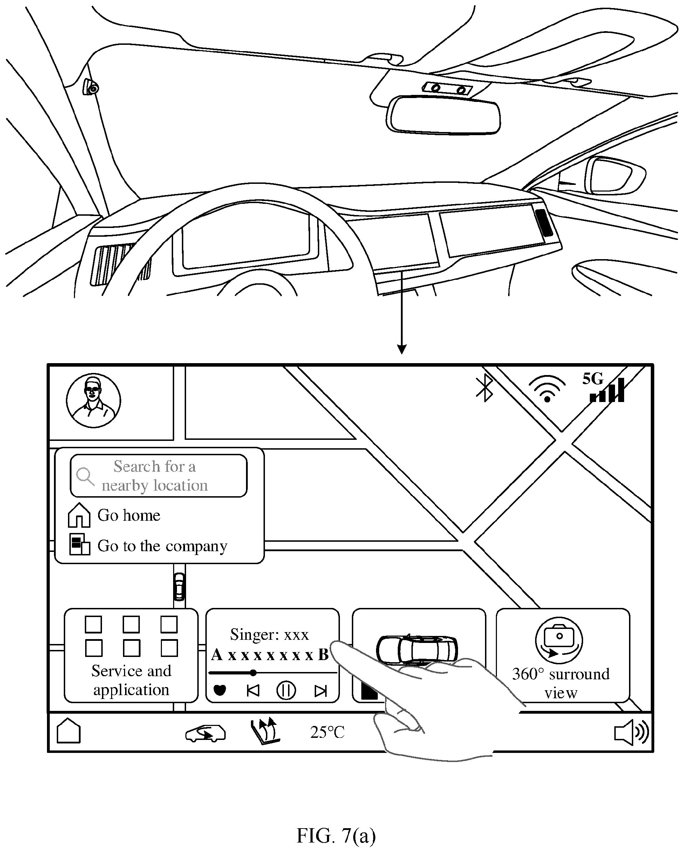

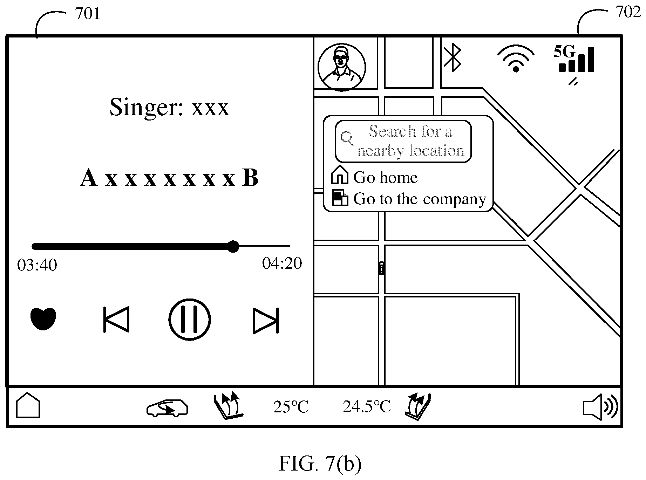

The foregoing describes, with reference to FIG. 3(a) to FIG. 3(c) to FIG. 5(a) and FIG. 5(b), processes of automatically popping up and automatically hiding a widget. The following describes, with reference to FIG. 6(a) and FIG. 6(b) and FIG. 7(a) and FIG. 7(b), an operation process performed by a user on a widget after the widget is automatically popped up.

FIG. 6(a) and FIG. 6(b) show another group of GUIs according to an embodiment of this application.

As shown in FIG. 6(a), when a vehicle detects, by using a sensor, that a finger of a user approaches a display, the vehicle may automatically pop up the widgets 203 to 206 on the display. When the vehicle detects an operation of tapping the widget 204 by the user, the vehicle may display, on the display, a GUI shown in FIG. 6(b).

As shown in FIG. 6(b), in response to detecting the operation of tapping the widget 204 by the user, the vehicle may switch, in a content display area on the display, from displaying a navigation interface to displaying a display interface 601 of an in-vehicle music application.

When detecting the operation of tapping the widget 204 by the user, the vehicle may switch to displaying the display interface of the in-vehicle music application; or may display the navigation interface and the display interface of the in-vehicle music application in different areas. FIG. 7(a) and FIG. 7(b) show another group of GUIs according to an embodiment of this application.

As shown in FIG. 7(a), when a vehicle detects an operation of tapping the widget 204 by a user, the vehicle may display, on a display, a GUI shown in FIG. 7(b).

As shown in FIG. 7(b), in response to detecting the operation of tapping the widget 204 by the user, the vehicle may display a display interface of an in-vehicle music application and a navigation interface in different areas. For example, the display interface of the in-vehicle music application may be displayed in an area 701, and the navigation interface may be displayed in an area 702.

In an embodiment, the vehicle may further display the display interface of the in-vehicle music application and the navigation interface based on an area in which the user tapping the widget 204 is located. For example, when the vehicle detects an operation of tapping the widget 204 by the user in a driver area, the vehicle may display, on the display, a display interface of a newly started in-vehicle music application on a side (for example, the area 701) close to the driver area, and display a navigation interface of a previously started in-vehicle map application on a side (for example, the area 702) away from the driver area.

For example, when the vehicle detects an operation of tapping the widget 204 by the user in a co-driver area, the vehicle may display, on the display, a display interface of a newly started in-vehicle music application on a side (for example, the area 702) close to the co-driver area, and display a navigation interface of a previously started in-vehicle map application on a side (for example, the area 701) away from the co-driver area.

In this embodiment of this application, when a tap operation performed by the user on a widget on the display is detected, the vehicle may display, in a split-screen manner, a display interface of a newly started application and a display interface of a previously started application. In addition, the vehicle may display, on the display, the newly started application on a side close to the user, so that it is convenient for the user to view the display interface of the newly started application.

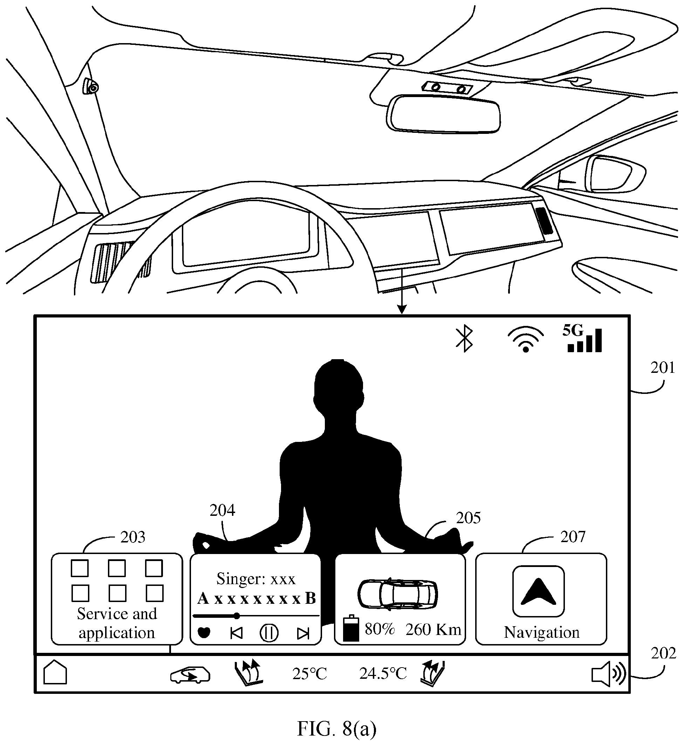

The following describes, with reference to FIG. 8(a) to FIG. 8(c), processes of automatically enabling or disabling a function of automatically popping up or hiding a widget in different scenarios. FIG. 8(a) to FIG. 8(c) show another group of GUIs according to an embodiment of this application.

As shown in FIG. 8(a), a vehicle displays a home screen on a display. The home screen includes wallpaper information, the widgets 203 to 205, a widget 207 corresponding to an in-vehicle map application, and the function bar 202. In this case, if the vehicle does not detect an operation of starting any application by a user, the vehicle may disable a function of automatically popping up or hiding a widget. Therefore, the widgets 203 to 205 and the widget 207 are not automatically popped up as a finger of the user approaches the display, and are not automatically hidden as the finger of the user moves away from the display. The widgets 203 to 205 and the widget 207 may be always displayed in the content display area 201.

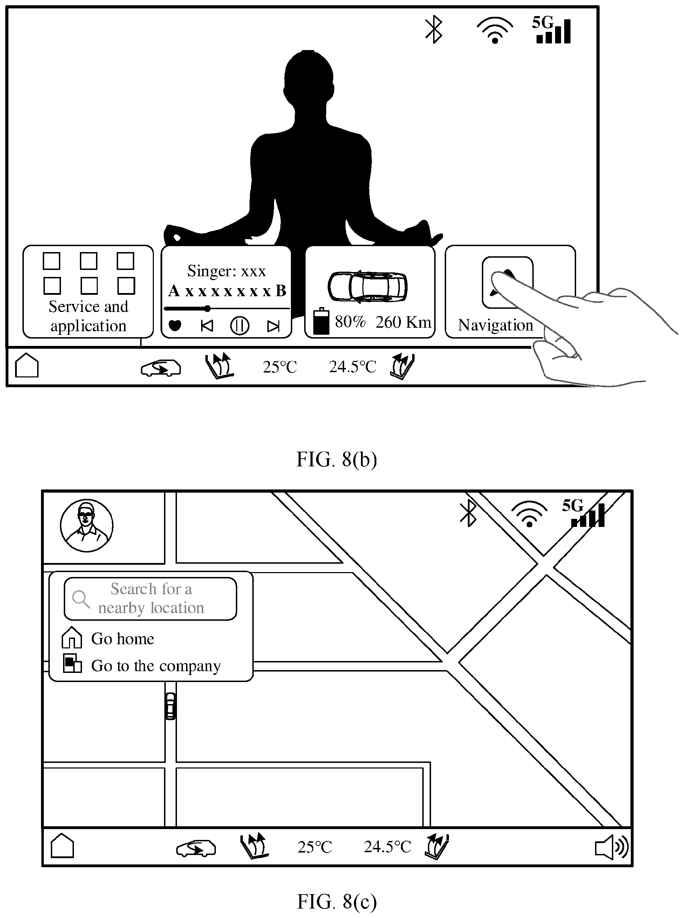

As shown in FIG. 8(b), when detecting an operation of tapping the widget 207 by the user, the vehicle may display, on the display, a GUI shown in FIG. 8(c).

As shown in FIG. 8(c), in response to detecting the operation of tapping the widget 207 by the user, the vehicle may display a display interface of the in-vehicle map application in the content display area 201 on the display. In this case, the vehicle can automatically enable the function of automatically popping up or hiding a widget. In this way, when the vehicle detects, by using a sensor, that the user does not interact with the display, the vehicle may automatically hide the widgets 203 to 205 and the widget 207 on the display.

Whether the vehicle enables the function of automatically popping up or hiding a widget may be determined by whether the vehicle is currently displaying a display interface of an application on the display. For example, when the vehicle does not display a display interface of an application on the display, the vehicle may disable the function of automatically popping up or hiding a widget. In this case, the widget may be always displayed in the content display area 201. When the vehicle detects an operation of starting an application by the user and the vehicle displays a display interface of the application, the vehicle may enable the function of automatically popping up or hiding a widget. In this case, the widget may be automatically popped up as the finger of the user approaches the display, or automatically hidden as the finger of the user moves away from the display. Embodiments of this application are not limited thereto. The vehicle may further determine, based on a type of an application, whether to enable the function of automatically popping up or hiding a widget. For example, when the vehicle displays a navigation interface of an in-vehicle map application, the vehicle may enable the function of automatically popping up or hiding a widget. For another example, when the vehicle displays a display interface of an in-vehicle music application, the vehicle may disable the function of automatically popping up or hiding a widget.

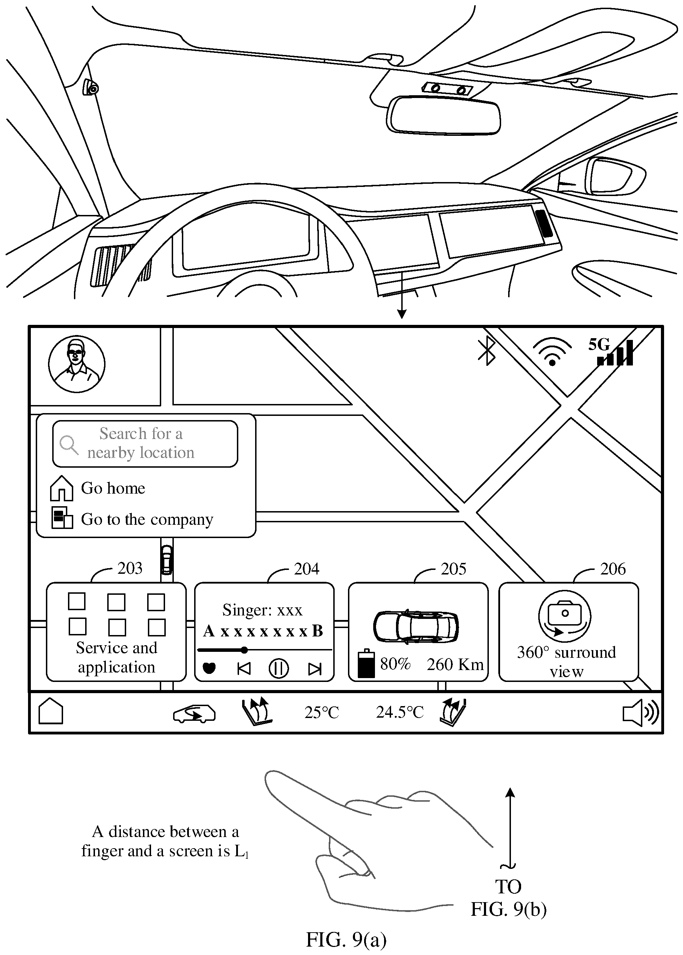

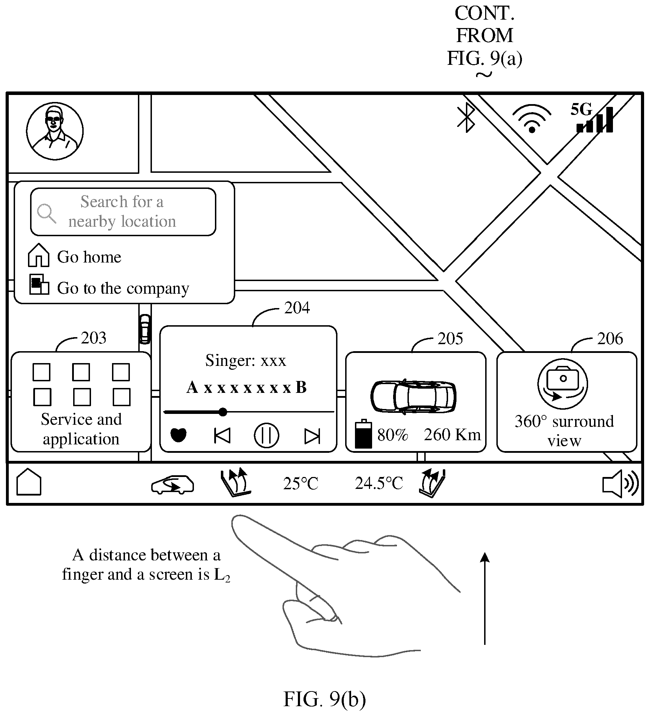

The following describes, based on a GUI shown in FIG. 9(a) and FIG. 9(b), an embodiment in which after a widget is automatically popped up, a vehicle may further enlarge or restore a display size of the widget based on a distance between a finger of a user and a second area on a display, to further improve human-machine interaction experience of the user. FIG. 9(a) and FIG. 9(b) show another group of GUIs according to an embodiment of this application.

As shown in FIG. 9(a), when a vehicle detects that a distance L₁ between a finger of a user and a first area on a display is less than or equal to a first preset distance, the vehicle may automatically pop up the widgets 203 to 206 on the display. In this case, display sizes of the widgets 203 to 206 may be a first size (for example, a height of the widget is 160 pixels).

As shown in FIG. 9(b), when the vehicle detects that a distance L₂ between the finger of the user and a second area on the display is less than or equal to a third preset distance, the vehicle may enlarge a display size of the widget 204 on the display. The second area may include a display area of the widget 204. For example, the vehicle may enlarge the size of the widget 204 from a first size to a second size (for example, a height of the widget is expanded to 240 pixels). This is convenient for the user to operate the widget 204 and also helps improve human-machine interaction experience of the user. For example, the third preset distance may be 8 cm.

In an embodiment, the second area may be a display area of a navigation interface; the second area may be the display area of the widget 204; or the second area may be an area larger than the display area of the widget 204. For example, the second area may be an area obtained after the display area of the widget 204 is expanded by a preset multiple (for example, 1.1 times). For another example, the second area may be an area obtained after the widget 204 separately extends outward by 2 cm in a height direction and a width direction.

In the foregoing process of expanding the size of the widget from the first size to the second size, an example in which the height of the widget is expanded by 1.5 times is used for description. Embodiments of this application are not limited thereto. A width of the widget 204 in the first size may be the same as a width of the widget 204 in the second size. Alternatively, in a process in which the size of the widget 204 is enlarged from the first size to the second size, a width of the widget 204 may be enlarged. For example, the width of the widget 204 in the second size may be 1.1 times the width of the widget 204 in the first size.

In an embodiment, the widgets 203 to 206 may alternatively be always displayed on the display. When the vehicle detects that the distance L₂ between the finger of the user and the second area on the display is less than or equal to the third preset distance, the vehicle may enlarge the display size of the widget 204.

In an embodiment, when it is detected that a distance between the finger of the user and the second area on the display is greater than the third preset distance, the size of the widget 204 may be restored from the second size to the first size on the display. When it is detected that the distance between the finger of the user and the first area on the display is greater than the first preset distance, the widgets 203 to 206 may be automatically hidden.

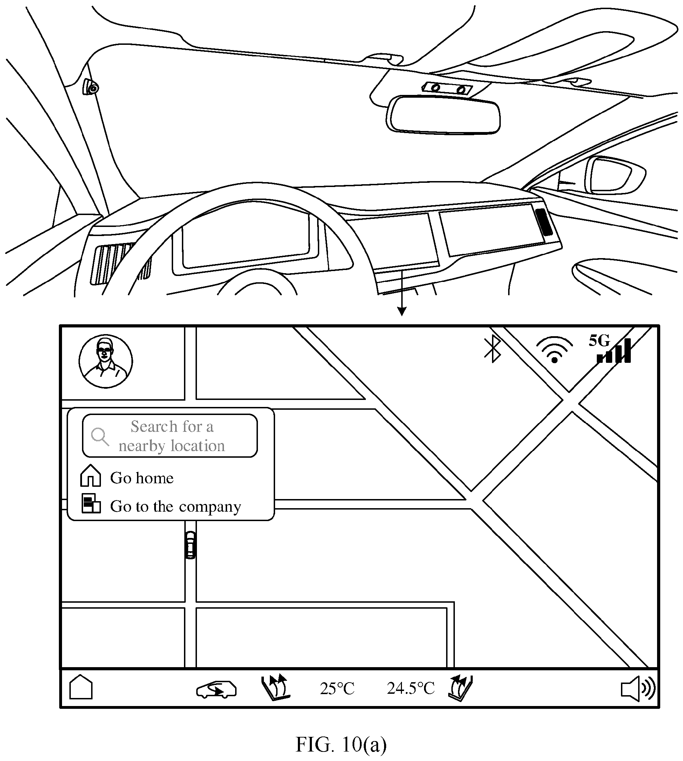

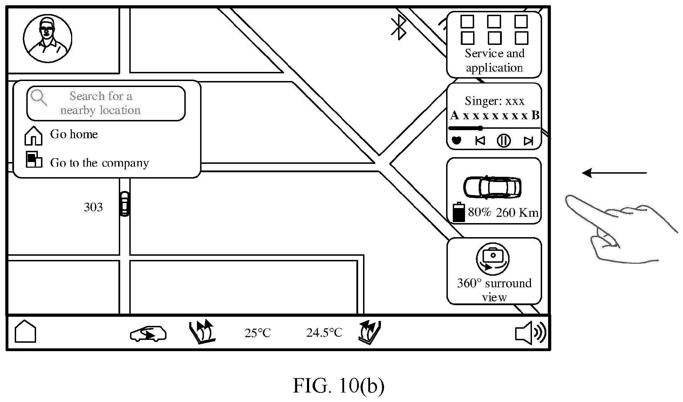

The following describes, based on a GUI shown in FIG. 10(a) and FIG. 10(b), a process in which a vehicle determines, based on a direction in which a finger of a user approaches, an area in which a widget is automatically popped up. In this way, when the finger of the user approaches a display from different directions, the widget may be displayed at different locations. This is convenient for the user to operate the widget and also helps improve human-machine interaction experience of the user. FIG. 10(a) and FIG. 10(b) show another group of GUIs according to an embodiment of this application.

As shown in FIG. 10(a), when detecting, by using a sensor, that a user does not interact with a display, a vehicle may display a navigation interface in a content display area, and not display a widget.

As shown in FIG. 10(b), when detecting that a finger of the user approaches the display from a right side of the display, the vehicle may automatically pop up the widgets 203 to 206 on the right side of the display. This is convenient for the user to directly operate the widget displayed on the right side of the display, to help improve human-machine interaction experience of the user.

That the vehicle detects that the finger of the user approaches the display from the right side of the display may be understood as that the vehicle detects that the finger of the user approaches the display in a direction from the right side to a left side.

The widgets 203 to 206 may be arranged on the right side of the display in one column, or may be arranged on the right side of the display in columns of sheets.

In an embodiment, when detecting that the finger of the user approaches the display from the left side of the display, the vehicle may automatically pop up the widgets 203 to 206 on the left side of the display.

In this embodiment of this application, when a user in a driver area wants to operate a widget, the user usually selects to use a finger to approach the display from the left side of the display. In this case, the vehicle may automatically pop up the widget on the display, and display the widget on the left side of the display. This is convenient for the user in the driver area to operate the widget. When a user in a co-driver area wants to operate a widget, the user usually selects to use a finger to approach the display from the right side of the display. In this case, the vehicle may automatically pop up the widget on the display, and display the widget on the right side of the display. This is convenient for the user in the co-driver area to operate the widget.

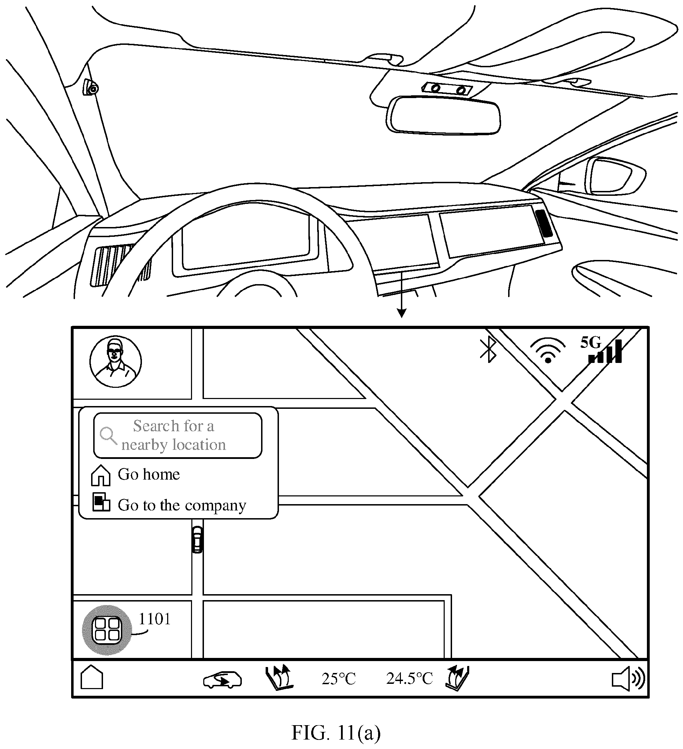

The following describes, with reference to FIG. 11(a) to FIG. 11(c), a process of determining, by determining whether a finger of a user approaches a display, to expand or collapse a floating icon on the display in an embodiment of this application. FIG. 11(a) to FIG. 11(c) show another group of GUIs according to an embodiment of this application.

As shown in FIG. 11(a), when detecting, by using a sensor, that a user does not interact with a display, a vehicle may display a navigation interface and a floating icon 1101 in a content display area. The floating icon 1101 is associated with one or more applications. For example, the floating icon 1101 may be associated with a game application, a weather application, and an in-vehicle music application.

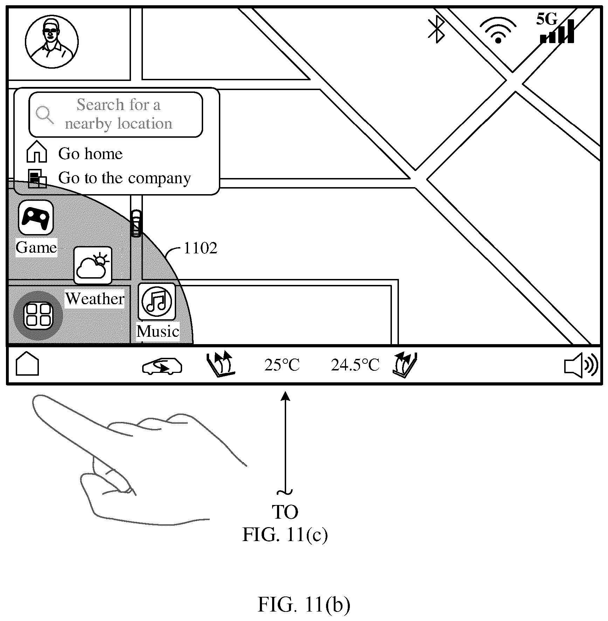

As shown in FIG. 11(b), when detecting that a finger of the user approaches the display, the vehicle may display, on the display, an application list 1102 (a display area of the application list 1102 is a gray sector area shown in FIG. 11(b)) obtained after the floating icon 1101 is expanded. The application list 1102 includes the floating icon 1101, an icon of the game application, an icon of the weather application, and an icon of the in-vehicle music application.

In an embodiment, when detecting that a distance between the finger of the user and a first area on the display is less than or equal to a first preset distance, the vehicle may automatically pop up the floating icon 1101 on the display, where the first area includes a display area of the floating icon 1101. When detecting that the distance between the finger of the user and the first area is less than or equal to a third preset distance, the vehicle may automatically open, on the display, the application list corresponding to the floating icon 1101, where the third preset distance is less than the first preset distance. For example, the first area may be an area in which the floating icon 1101 is located; or the first area may be an area larger than the area in which the floating icon 1101 is located. For example, the first area may be an area obtained after the display area of the floating icon 1101 is expanded by a preset multiple (for example, 1.1 times).

In an embodiment, the vehicle may determine a location at which the floating icon 1101 is automatically popped up based on an approaching direction of the finger of the user. For example, the location at which the floating icon is automatically popped up may include a location at a lower left corner or a lower right corner in the content display area. When detecting that the finger of the user approaches the display from a left side of the display, the vehicle may automatically pop up the floating icon 1101 at the lower left corner in the content display area. For example, when detecting that the finger of the user approaches the display from a right side of the display, the vehicle may automatically pop up the floating icon 1101 at the lower right corner in the content display area.

In an embodiment, when the vehicle detects, by using the sensor, that the finger of the user approaches the display, the vehicle may further continue to display the floating icon 1101 while displaying the application list. In this way, when detecting an operation of tapping the floating icon 1101 by the user, the vehicle may collapse the application list 1102; when detecting a tap operation of the user in a display area other than the display area of the application list 1102, the vehicle may collapse the application list 1102; or when detecting that the finger of the user is away from the display, the vehicle may collapse the application list 1102.

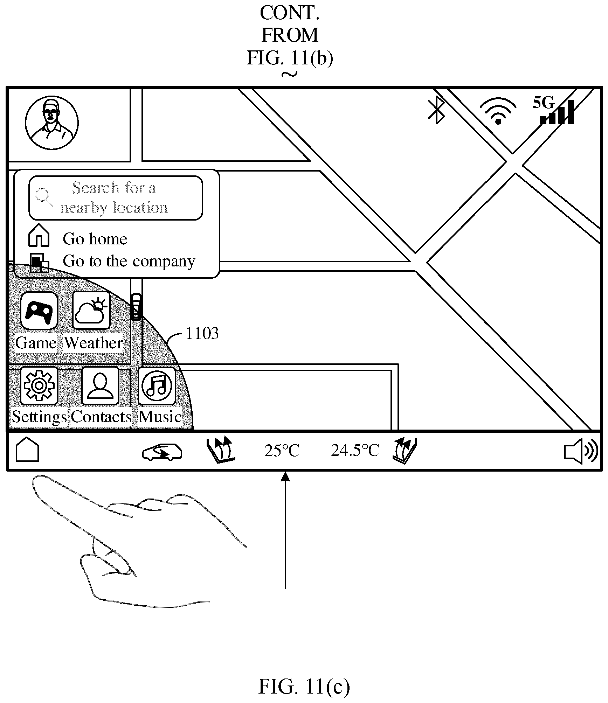

For another example, the floating icon 1101 may be associated with the game application, the weather application, the in-vehicle music application, a setting function, and contacts. As shown in FIG. 11(c), when detecting, by using the sensor, that the finger of the user approaches the display, the vehicle may display, on the display, an application list 1103 (a display area of the application list 1103 is a gray sector area shown in FIG. 11(c)) obtained after the floating icon 1101 is expanded. The application list 1103 includes the icon of the game application, the icon of the weather application, the icon of the in-vehicle music application, an icon of the setting function, and an icon of the contacts.

The one or more applications associated with the floating icon 1101 may be set by the user, or may be one or more of applications recently opened by the user.

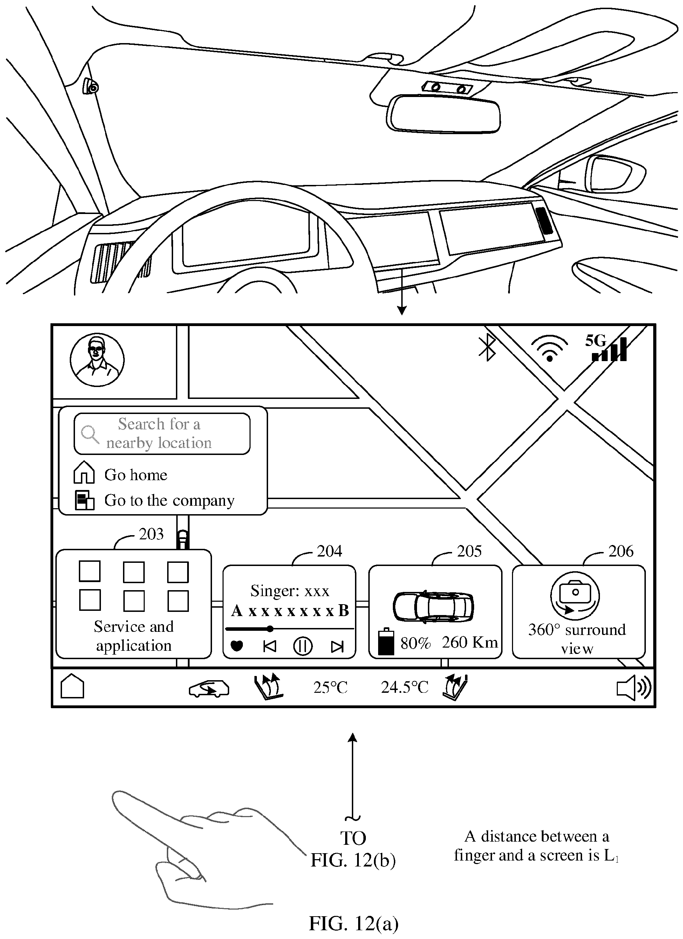

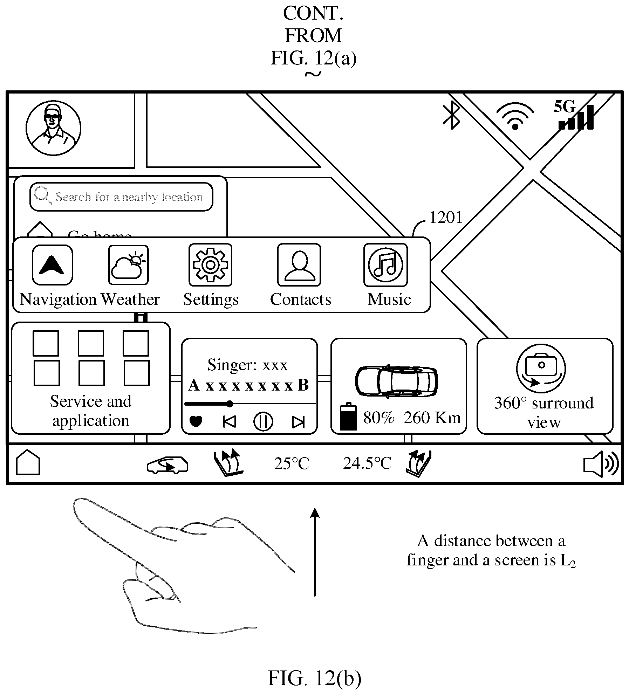

FIG. 12(a) and FIG. 12(b) show another group of GUIs according to an embodiment of this application.

As shown in FIG. 12(a), when a vehicle detects that a distance L₁ between a finger of a user and a second area on a display is less than or equal to a third preset distance, the vehicle may enlarge a size of the widget 203 from a first size to a second size. The second area may include a display area of the widget 203. For example, the second area may be a display area of a navigation interface; the second area may be the display area of the widget 203; or the second area may be an area larger than the display area of the widget 203. For example, the second area may be an area obtained after the display area of the widget 203 is expanded by a preset multiple (for example, 1.1 times). For another example, the second area may be an area obtained after the widget 203 separately extends outward by 2 cm in a height direction and a width direction.

As shown in FIG. 12(b), when the vehicle detects that a distance L₂ between the finger of the user and the second area on the display is less than or equal to a fifth preset distance, the vehicle may display, on the display, an application list 1201 corresponding to Service and application, where the fifth preset distance is less than the third preset distance. For example, the fifth preset distance is 5 cm. The application list 1201 includes an icon of an in-vehicle navigation application, an icon of a weather application, an icon of settings, an icon of contacts, and an icon of an in-vehicle music application.

In an embodiment, the widgets 203 to 206 may be always displayed on the display. When detecting that the distance L₁ between the finger of the user and the second area on the display is less than or equal to the third preset distance, the vehicle may enlarge the display size of the widget 203 on the display.

In an embodiment, alternatively, the widgets 203 to 206 may be automatically popped up as the finger of the user approaches the display. For example, when a distance between the finger of the user and a first area on the display is greater than a first preset distance, the vehicle may hide the widgets 203 to 206 on the display. When the distance between the finger of the user and the first area on the display is less than or equal to the first preset distance, the vehicle may automatically pop up the widgets 203 to 206 on the display. For description of the first area, refer to description in the embodiment corresponding to the GUIs shown in FIG. 3(a) to FIG. 3(c). Details are not described herein again.

In an embodiment, when it is detected that a distance between the finger of the user and the second area on the display changes from less than or equal to the fifth preset distance to greater than the fifth preset distance and less than or equal to the third preset distance, the application list 1201 may be collapsed on the display. When it is detected that the distance between the finger of the user and the second area on the display is greater than the third preset distance, the size of the widget 203 may be restored from the second size to the first size on the display.

In this embodiment of this application, when the distance between the finger of the user and the second area on the display is less than the third preset distance, the vehicle may enlarge the widget corresponding to Service and application. This helps the user tap the widget. When the distance between the finger of the user and the second area on the display is less than or equal to the fifth preset distance, the vehicle may automatically display a submenu corresponding to Service and application. This helps the user directly operate an icon of an application in the submenu on the navigation interface without a need to switch to a display interface of Service and application. This helps prevent the user from frequently switching a display interface on the display, to help improve driving safety of the user. In addition, after the finger of the user moves away from the display, the vehicle may further automatically hide the widget, to prevent the widget from blocking the navigation interface that the user expects to see. This helps improve an imaging effect of the display.

It should be understood that the first preset distance, the second preset distance, the third preset distance, the fourth preset distance, and the fifth preset distance in embodiments of this application may be set by the user, or may be set before the vehicle is delivered from a factory.

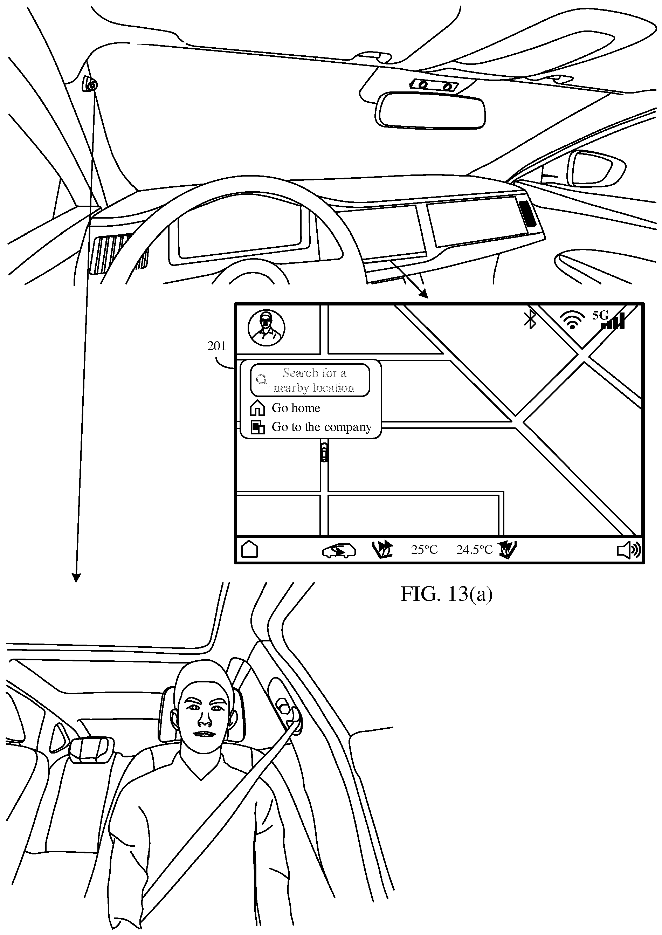

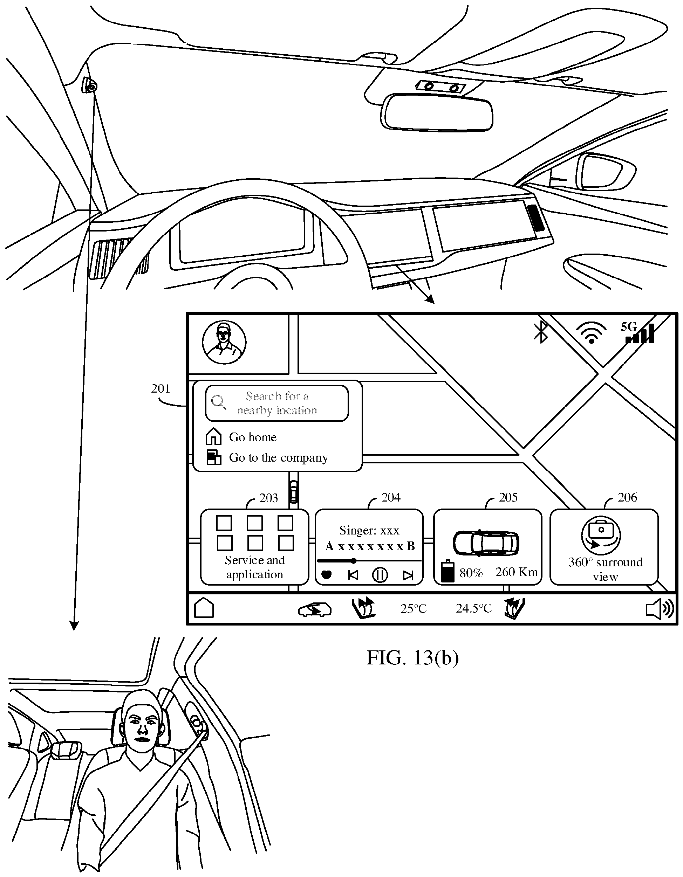

The following describes, with reference to FIG. 13(a) and FIG. 13(b), an embodiment in which automatic popping up or hiding of an interface element is implemented by collecting a gaze direction of a user by using a camera or an eye tracker. FIG. 13(a) and FIG. 13(b) show another group of GUIs according to an embodiment of this application.

As shown in FIG. 13(a), when detecting, by using a camera or an eye tracker, that a gaze of a user is not on a display, a vehicle may display a navigation interface in the content display area 201, and not display the widgets 203 to 206. In this way, because the widgets 203 to 206 are hidden, the user sees more navigation content in the content display area 201.

As shown in FIG. 13(b), when detecting, by using the camera, that the gaze of the user is on the display, the vehicle may automatically pop up the widgets 203 to 206 in the content display area 201.

In an embodiment, the content display area 201 may be divided into the area 1 and the area 2 shown in FIG. 3(c). That when it is detected that the gaze of the user is on the display, the widgets 203 to 206 may be automatically popped up in the content display area 201 includes: When detecting that the gaze of the user is in the area 2, the vehicle may automatically pop up the widgets 203 to 206 in the content display area 201. In this way, when determining that the gaze of the user is in the area 2, the vehicle may automatically pop up a widget in the content display area 201. This is convenient for the user to operate the widget. When determining that the gaze of the user is in the area 1, the vehicle may determine that the gaze of the user is on the navigation interface, and may not pop up the widget. In this way, an area in which the gaze is located is determined, so that accuracy of determining, by the vehicle, whether to automatically pop up the widget can be improved, and a process of automatically popping up or hiding the widget better meets an intent of the user.

In an embodiment, if the vehicle does not detect an operation performed by the user on the widgets 203 to 206 within preset duration after the widgets 203 to 206 are popped up, the widgets 203 to 206 may be automatically hidden on the display.

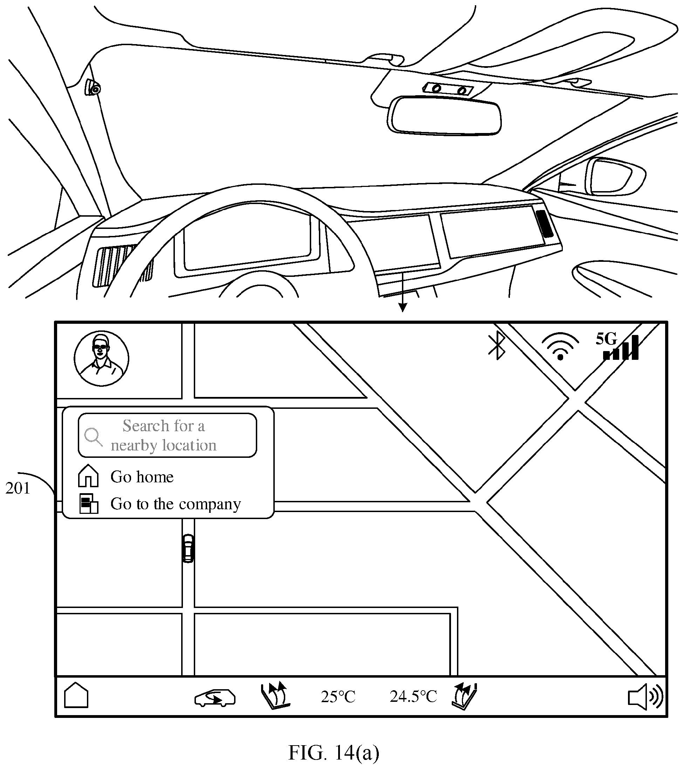

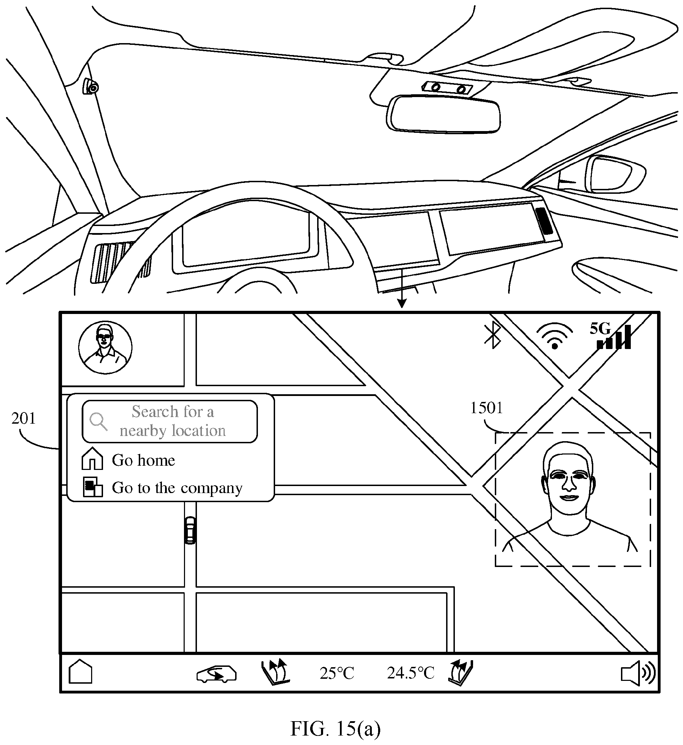

In the foregoing embodiment, an example in which the interface element is the widget is used for description. Embodiments of this application are not limited thereto. The following describes, with reference to GUIs shown in FIG. 14(a) to FIG. 14(c) and FIG. 15(a) to FIG. 15(f), a human-machine interaction process in which an interface element is a message prompt box, a human-machine interaction model, or another type of widget.

FIG. 14(a) to FIG. 14(c) show another group of GUIs according to an embodiment of this application.

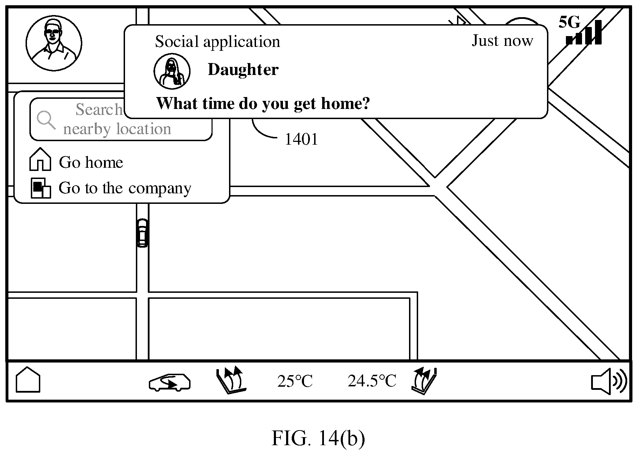

As shown in FIG. 14(a), a vehicle may display a navigation interface of an in-vehicle map application in the content display area 201. When receiving a message of a social application, the vehicle may display, on a display, a GUI shown in FIG. 14(b).

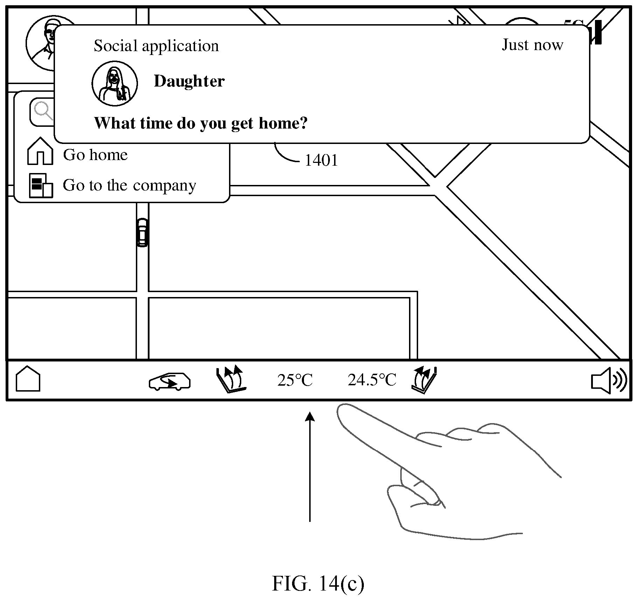

As shown in FIG. 14(b), in response to receiving the message, the vehicle may display a message prompt box 1401 in the content display area 201. A size of the message prompt box 1401 is a third size (for example, a height of the message prompt box is 160 pixels). The message prompt box 1401 includes a name of the social application, a profile picture and a nickname (for example, a daughter) of a user sending the message, and content (for example, time at which the user reach home) of the message. When detecting that a finger of the user approaches the display, the vehicle may display, on the display, a GUI shown in FIG. 14(c).

As shown in FIG. 14(c), in response to detecting that the finger of the user approaches the display, the vehicle may enlarge the size of the message prompt box 1401 from the third size to a fourth size (for example, a height of the message prompt box 1401 in the fourth size is 240 pixels). In this way, that the finger of the user approaches the display is detected, so that the vehicle can determine that the user expects to view the message, so as to enlarge the size of the message prompt box. Enlargement of the size of the message prompt box helps improve convenience of tapping the message prompt box by the user. This helps improve human-machine interaction experience of the user.

FIG. 15(a) to FIG. 15(f) show another group of GUIs according to an embodiment of this application.

As shown in FIG. 15(a), a vehicle may display a navigation interface of an in-vehicle map application and a human-machine interaction model 1501 in the content display area 201. A size of the human-machine interaction model is a fifth size.

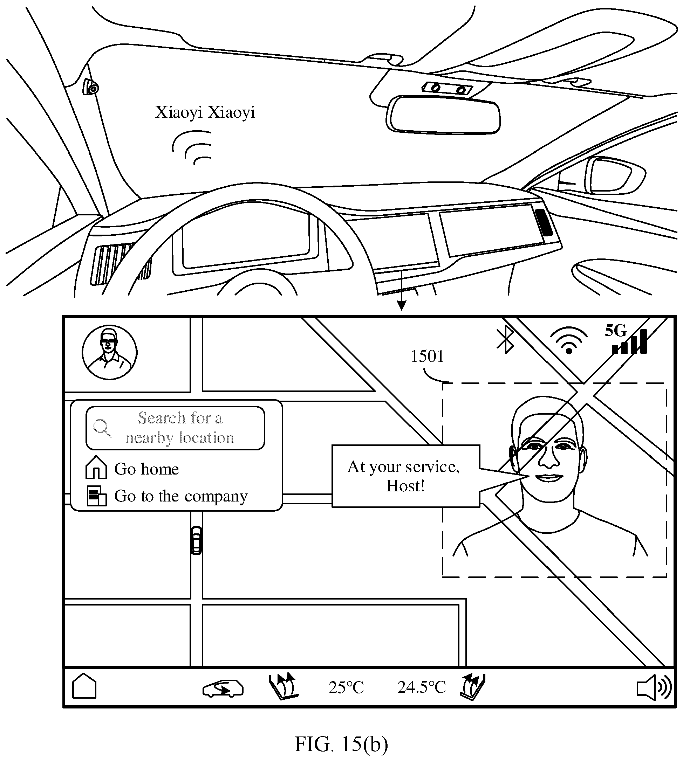

As shown in FIG. 15(b), when a voice instruction received by the vehicle from a user through a microphone includes a wake-up word "XiaoA XiaoA", the vehicle may respond to the voice instruction by using the human-machine interaction model 1501 (for example, the human-machine interaction model 1501 may reply with "At your service, Host!"). When making a response by using the human-machine interaction model 1501, the vehicle may enlarge the size of the human-machine interaction model 1501 from the fifth size to a sixth size.

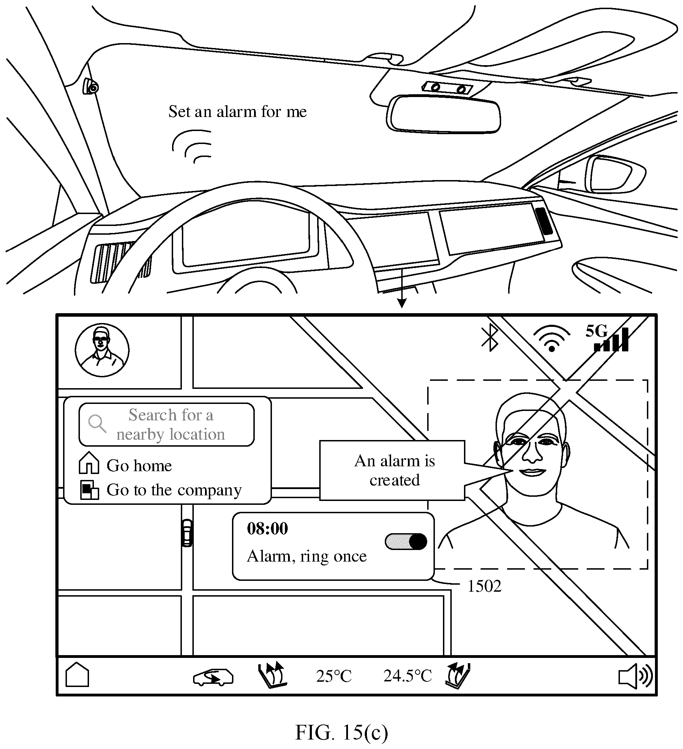

As shown in FIG. 15(c), when the vehicle receives, through the microphone, a voice instruction "Set an alarm for me" from the user, the vehicle may respond to the voice instruction by using the human-machine interaction model 1501 (for example, the human-machine interaction model 1501 may reply with "An alarm is created") and create an alarm widget 1502, where a size of the alarm widget 1502 is a seventh size. When making a response by using the human-machine interaction model 1501, the vehicle may enlarge the size of the human-machine interaction model 1501 from the fifth size to the sixth size.

In an embodiment, if the voice instruction "Set an alarm for me" includes an intent (intent) of the user, and slot (slot) information corresponding to the intent is missing (for example, information about an alarm time point of the alarm is missing), the vehicle may create the alarm widget 1502 in the content display area 201. If the voice instruction includes the intent of the user and the slot information corresponding to the intent is complete, the vehicle may not display the widget 1502 in the content display area 201, but directly perform an operation corresponding to the intent in a background. For example, when the vehicle receives, through the microphone, a voice instruction "Create an alarm at 3:30 p.m. for me" from the user, the vehicle may determine an intent of the user and corresponding slot information. In this way, an operation of creating the alarm at 3:30 p.m. can be performed in the background.

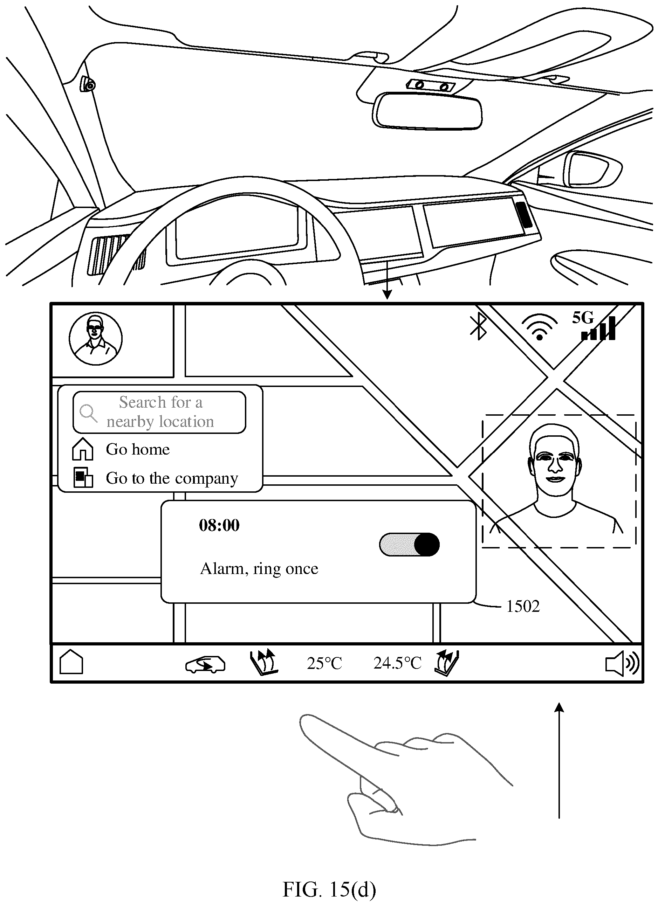

When detecting that a finger of the user approaches the display, the vehicle may display, on the display, a GUI shown in FIG. 15(d).

As shown in FIG. 15(d), in response to detecting that the finger of the user approaches the display, the vehicle may enlarge the size of the alarm widget 1502 from the seventh size to an eighth size. In this way, that the finger of the user approaches the display is detected, so that the vehicle may determine that the user expects to set the alarm, so as to enlarge the size of the alarm widget. Enlargement of the size of the alarm widget helps improve convenience of tapping the alarm widget by the user. This helps improve human-machine interaction experience of the user.

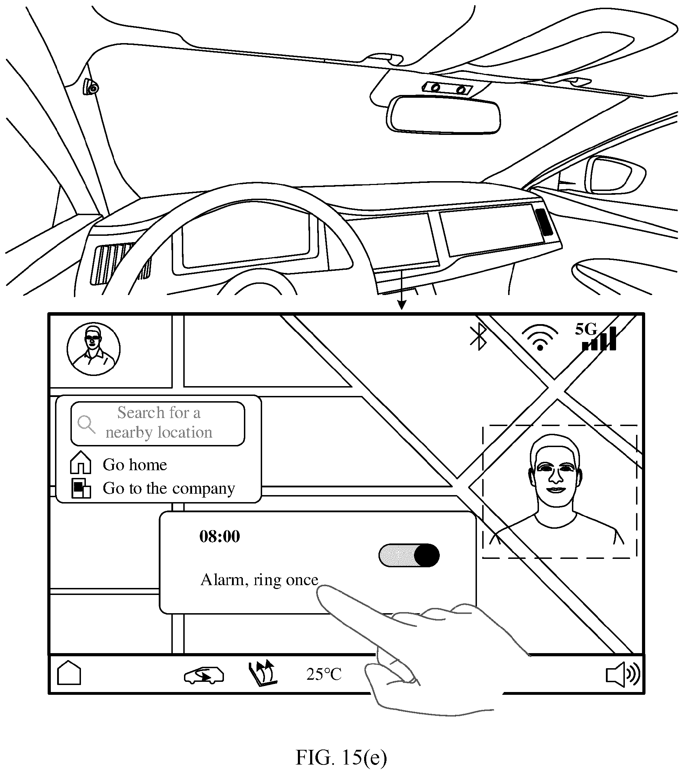

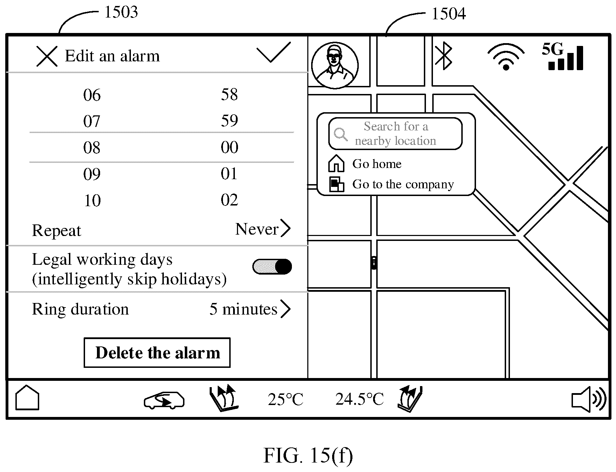

As shown in FIG. 15(e) and FIG. 15(f), in response to detecting an operation of tapping the alarm widget 1502 by the user, the vehicle may display an alarm setting interface and the navigation interface in different areas. For example, the vehicle may display the alarm setting interface in an area 1503 in the content display area 201, and display the navigation interface in an area 1504 in the content display area 201.

In an embodiment, when detecting an operation of tapping the alarm widget 1502 by a finger of a user in a driver area, the vehicle may display the alarm setting interface in the area 1503 and display the navigation interface in the area 1504. This is convenient for the user in the driver area to set the alarm. When detecting an operation of tapping the alarm widget 1502 by a finger of a user in a co-driver area, the vehicle may display the alarm setting interface in the area 1504 and display the navigation interface in the area 1503. This is convenient for the user in the co-driver area to set the alarm.

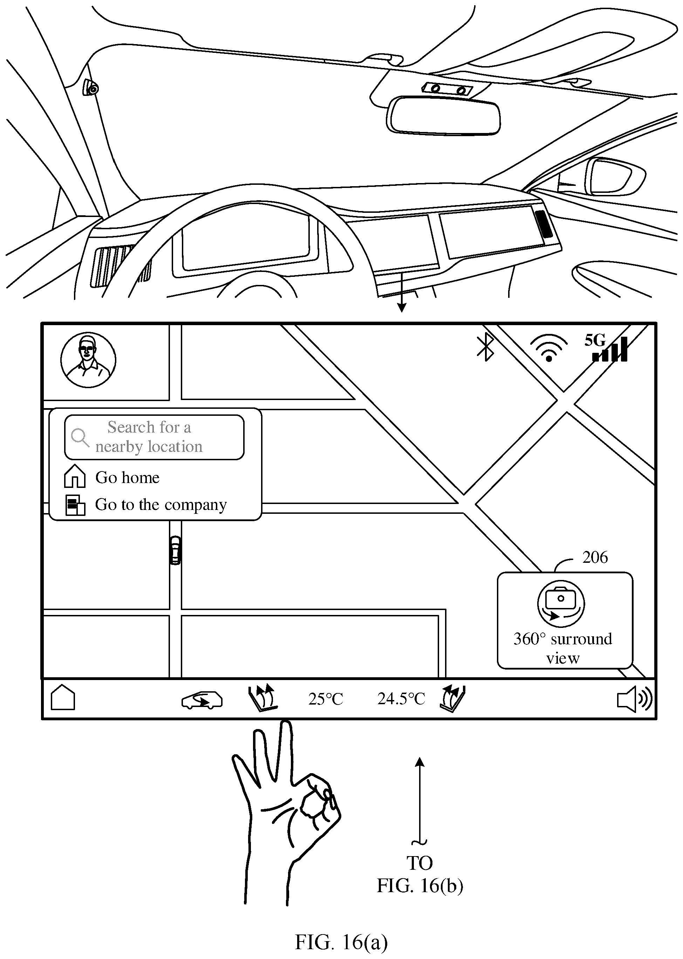

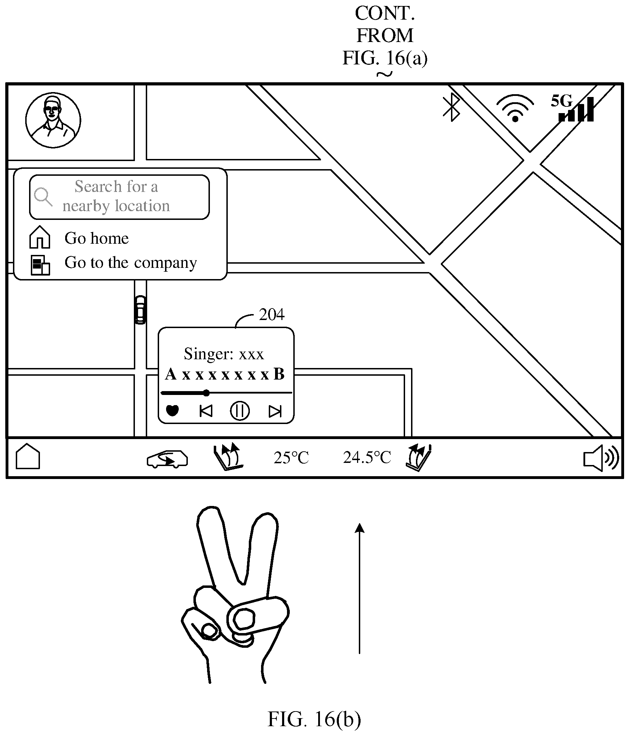

In embodiments of this application, in addition to triggering automatic popping up of a widget by using approaching of a finger to the display, different interface elements may be triggered to pop up by using different gestures. FIG. 16(a) and FIG. 16(b) show another group of GUIs according to an embodiment of this application.

As shown in FIG. 16(a), when detecting that a user approaches a display in an air gesture 1 (for example, an OK gesture or a gesture existing when three fingers are held up), a vehicle may automatically pop up the widget 206 in the content display area 201 on the display, and the widget 206 may be displayed on a navigation interface. In this way, when detecting the air gesture 1, the vehicle may automatically pop up the widget 206. This avoids a process in which the user selects a required widget from a plurality of widgets, and is convenient for the user to operate the widget 206 in time, thereby helping improve human-machine interaction experience of the user.

As shown in FIG. 16(b), when detecting that the user approaches the display in an air gesture 2 (for example, a V gesture or a gesture existing when two fingers are held up), the vehicle may automatically pop up the widget 204 in the content display area 201 on the display, and the widget 204 may be displayed on the navigation interface. In this way, when detecting the air gesture 2, the vehicle may automatically pop up the widget 204. This avoids a process in which the user selects a required widget from a plurality of widgets, and is convenient for the user to operate the widget 204 in time, thereby helping improve human-machine interaction experience of the user.

In an embodiment, a correspondence between an air gesture and a pop-up widget may be set when the vehicle is delivered from a factory, or may be set by the user. This is not limited in embodiments of this application.

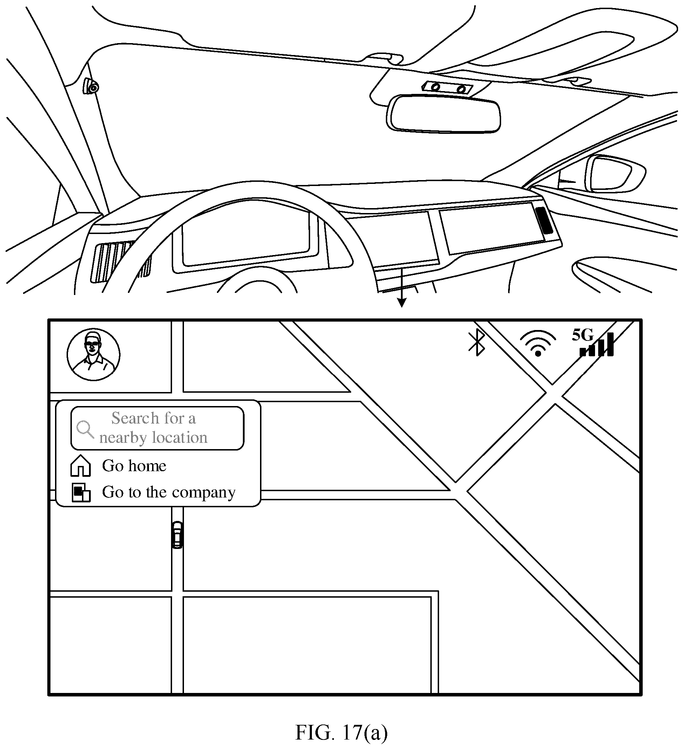

In the foregoing embodiment, an example in which the display is divided into the content display area 201 and the function bar 202 is used for description. The content display area 201 and the function bar 202 may be two areas independent of each other. Alternatively, the function bar 202 may be displayed in the content display area 201. FIG. 17(a) to FIG. 17(c) show another group of GUIs according to an embodiment of this application.

As shown in FIG. 17(a), when it is detected that a user does not interact with a display, a navigation interface may be displayed in the content display area 201, and the widgets 203 to 206 and the function bar 202 are not displayed. In this way, because the widgets 203 to 206 and the function bar 202 are hidden, the user sees more navigation content in the content display area 201.

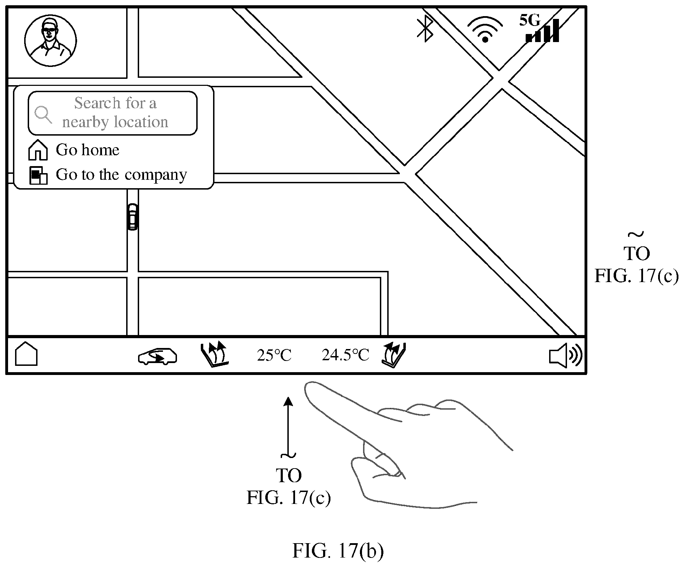

As shown in FIG. 17(b), when detecting that a finger of the user approaches the display from a down side of the display, the vehicle may display the function bar 202 on the navigation interface. In this way, that the finger approaches the display from the down side of the display is detected, so that the function bar 202 is displayed in the content display area 201. This is convenient for the user to operate a function in the function bar 202, and helps improve human-machine interaction experience of the user.

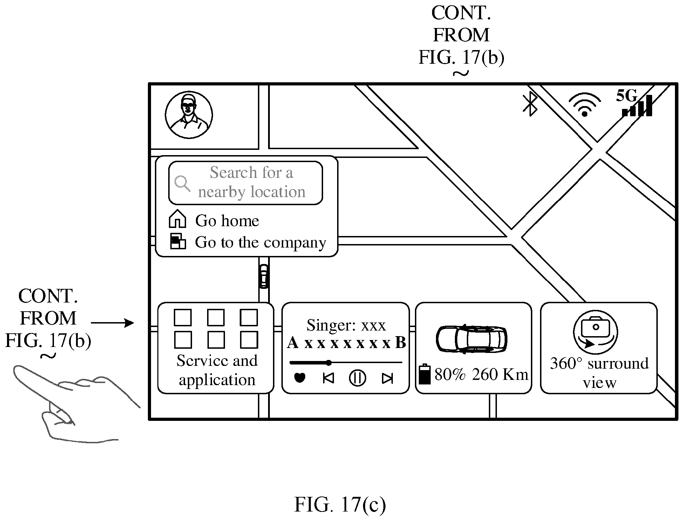

As shown in FIG. 17(c), when detecting that the finger of the user approaches the display from a left side of the display, the vehicle may automatically pop up the widgets 203 to 206 in the content display area 201. In this way, that the finger approaches the display from the left side of the display is detected, so that the widgets 203 to 206 are displayed in the content display area 201. This is convenient for the user to operate a widget among the widgets 203 to 206, and helps improve human-machine interaction experience of the user.

In an embodiment, when detecting that the finger of the user approaches the display from the left side of the display, the vehicle may automatically pop up the widgets 203 to 206 on the navigation interface, and the widgets 203 to 206 may be displayed on a left side of the navigation interface in column.

In an embodiment, when the vehicle detects, by using a sensor, that the finger of the user approaches the display from a right side of the display, the vehicle may automatically pop up the widgets 203 to 206 on the navigation interface.

In an embodiment, when the vehicle detects, by using the sensor, that the finger of the user approaches the display from the right side of the display, the vehicle may automatically pop up the widgets 203 to 206 on the navigation interface, and the widgets 203 to 206 may be displayed on a right side of the navigation interface in column.

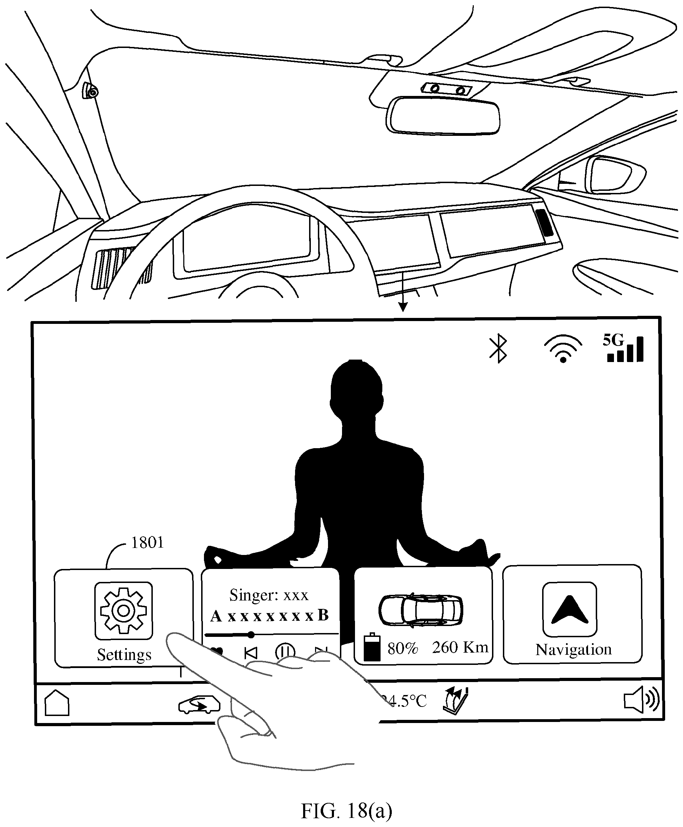

The following describes, with reference to a GUI shown in FIG. 18(a) to FIG. 18(e), a process in which a user manually sets a function of automatically popping up or hiding a widget to be enabled or disabled, and manually sets a correspondence between an air gesture and a widget.

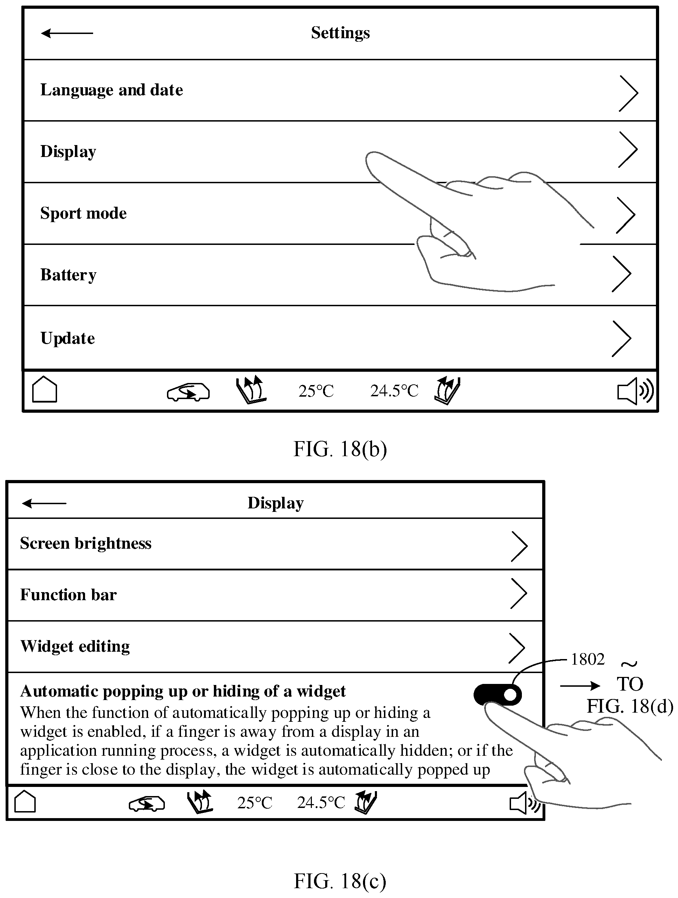

As shown in FIG. 18(a), a vehicle displays a home screen on a display. The home screen includes a widget 1801, and an icon of a setting function is displayed in the widget 1801. When detecting an operation of tapping the widget 1801 by a user, the vehicle may display, on the display, a GUI shown in FIG. 18(b).

As shown in FIG. 18(b), in response to detecting the operation of tapping the widget 1801 by the user, the vehicle may display, on the display, a display interface of the setting function. The setting function includes Language and date, a display function, a sport mode, a battery, and an update function. When detecting an operation of tapping the display function by the user, the vehicle may display, on the display, a GUI shown in FIG. 18(c).

As shown in FIG. 18(c), in response to detecting the operation of tapping the display function by the user, the vehicle may display a display interface of the display function on the display. The display interface includes settings of screen brightness, a function bar, widget editing, and a function of automatically popping up or hiding a widget, and description of the function of automatically popping up or hiding a widget. For example, the description of the function is "When a function of automatically popping up or hiding a widget is enabled, if a finger is away from a display in an application running process, a widget is automatically hidden; or if the finger is close to the display, the widget is automatically popped up". When detecting an operation of sliding a control 1802 from a left side to a right side by the user, the vehicle may enable the function of automatically popping up or hiding a widget.

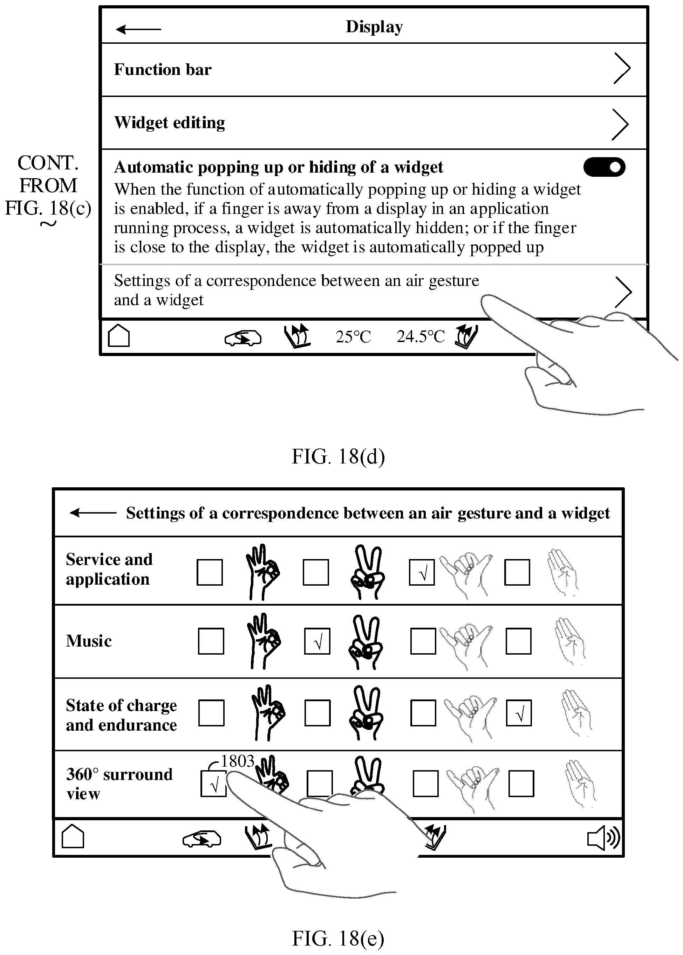

As shown in FIG. 18(d), the display interface further includes a function of setting a correspondence between an air gesture and a widget. When detecting that the user taps the function, the vehicle may display a GUI shown in FIG. 18(e).

As shown in FIG. 18(e), in response to detecting an operation of tapping the function by the user, the vehicle may display, on the display, a display interface of the function of setting a correspondence between an air gesture and a widget. On the setting interface, the user may set the correspondence between a widget and an air gesture corresponding to the widget. For example, when detecting a tap operation of the user in a rectangular box 1803, the vehicle may set a correspondence between the air gesture 1 and a 360° surround view. In this way, as shown in FIG. 16(a), when detecting that the user approaches the display in the air gesture 1, the vehicle may automatically pop up the widget 206 in the content display area 201 on the display.

In an embodiment, one air gesture may correspond to a plurality of widgets. For example, the correspondence between the air gesture 1 and a 360° surround view and a correspondence between the air gesture 1 and an in-vehicle music application may be set. In this way, when detecting that the user approaches the display in the air gesture 1, the vehicle may control the widget 204 and the widget 206 to be automatically popped up in the content display area 201 on the display.

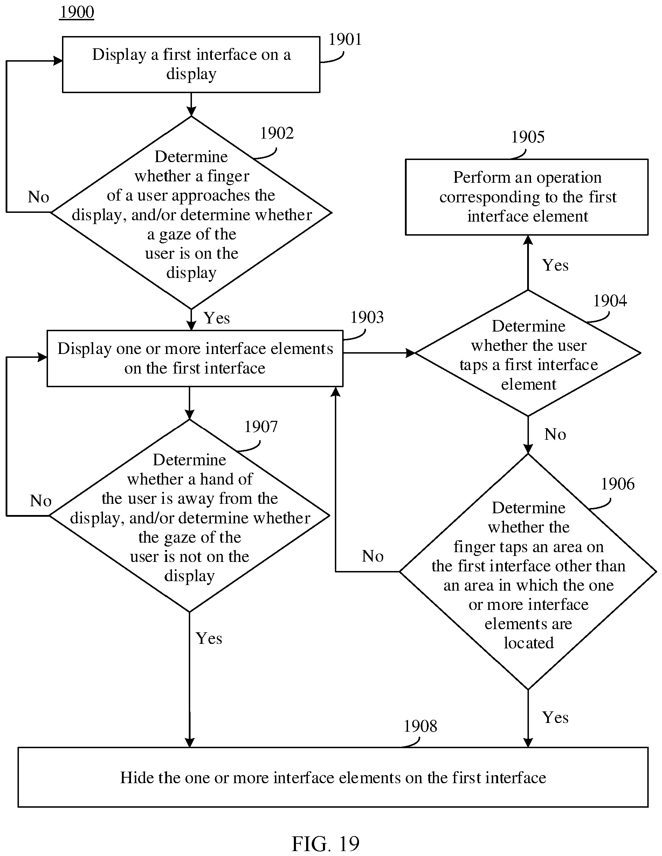

FIG. 19 is a schematic flowchart of a display method 1900 according to an embodiment of this application. The method 1900 may be applied to a system including a sensor, a display, and a computing platform; or the method 1900 may be applied to a vehicle. As shown in FIG. 19, the method 1900 includes the following steps.

S1901: Display a first interface on a display.

In an embodiment, that the first interface is displayed on the display includes: displaying a display interface of a first application on the display.

In an embodiment, the displaying a display interface of a first application on the display includes: displaying the display interface of the first application in response to detecting an operation of starting the first application by a user.

For example, the first application may be the foregoing navigation application.

S1902: Determine whether a hand of the user approaches the display, and/or determine whether a gaze of the user is on the display.

If it is detected that a finger of the user approaches the display and/or it is detected that the gaze of the user is on the display, S1903 is performed; or if it is detected that the finger of the user does not approach the display and the gaze of the user is not on the display, S1901 is performed again.

In an embodiment, that whether the hand of the user approaches the display is determined includes: determining whether the finger of the user approaches the display.

In an embodiment, the determining whether the finger of the user approaches the display includes: determining whether a distance between the hand of the user and a first area on the display is less than or equal to a first preset distance. The first area may be a display area of the first interface; the first area may be a display area of one or more interface elements, for example, the first area may be a display area of the widgets 203 to 206 in FIG. 2; if the one or more interface elements are the widgets 203 to 206 in FIG. 2, the first area may be the area 2 shown in FIG. 3(c); or in consideration of an error during detection of the first area, the first area may be an area larger than the area 2. For example, the first area may be an area obtained after the area 2 is expanded by a preset multiple (for example, 1.1 times). For another example, the first area may be an area obtained after the area 2 separately extends outward by 2 cm in a height direction and a width direction. In this way, when the distance between the hand and the first area is detected, a specific detection error can be ensured, so that the display can more easily trigger automatic popping up of the one or more interface elements.

The following uses an example in which the hand of the user is the finger to describe a process of determining, in a manner of combining one or more sensors, whether the finger of the user approaches the display.

In this embodiment of this application, hardware used to determine whether the finger of the user approaches the display includes but is not limited to a radio transceiver apparatus (including but not limited to a millimeter-wave radar or a centimeter-wave radar) on the display or at an edge of the display, an infrared sensing apparatus (including but not limited to an infrared rangefinder and a laser rangefinder) integrated on the display or at an edge of the display, a camera sensor (including but not limited to a red green blue (red green blue, RGB) camera, an RGB infrared radiation (RGB infrared radiation, RGB IR) camera, and a time of flight (time of flight, ToF) camera) integrated or mounted on the display or mounted inside a vehicle cabin, a lidar integrated or mounted on the display or mounted inside the vehicle cabin, an ultrasonic transceiver apparatus (including but not limited to a microphone sensor or a microphone sensor array) integrated or mounted on the display or mounted inside the vehicle cabin, an eye tracker, or the like.

In an embodiment, a process of detecting, by using the sensor, that the finger approaches the display includes: when it is detected that the distance between the finger and the first area on the display is less than or equal to the first preset distance, automatically popping up the one or more interface elements; or when it is detected that the distance between the finger and the first area on the display is greater than a second preset distance, hiding the one or more interface elements, where the first area includes the display area of the one or more interface elements.

In an embodiment, the process of detecting, by using the sensor, that the finger approaches the display further includes: when it is detected that the distance between the finger and a second area on the display is less than or equal to a third preset distance, expanding a size of the first interface element. The one or more interface elements include the first interface element, and the second area includes a display area of the first interface element.

For example, a process of determining, by using the radio transceiver apparatus, whether the finger approaches the display is as follows: An antenna layout of the radio transceiver apparatus (for example, the millimeter-wave radar or the centimeter-wave radar) is based on a layout location of an interface element, and the antenna may be mounted in a corresponding display frame center. If an interface element is at a corner of a screen, an antenna is mounted at a corresponding display corner. The radio transceiver apparatus sends a pulse signal, and sends a received echo signal to a computing platform. The computing platform may determine an orientation of the finger relative to the radio transceiver apparatus based on the echo signal. The computing platform may determine, based on a change in signal strength and/or signal quality of the echo signal, whether the finger approaches or moves away from the display. For example, when the signal strength of the detected echo signal gradually increases, it may be determined that it is a process in which the finger approaches the display; or when the signal strength of the detected echo signal gradually changes from strong to weak, it indicates that it is a process in which the finger moves away from the display.

In addition, the computing platform may further determine a distance between the finger and the radio transceiver apparatus based on the signal strength of the echo signal. For example, when it is detected that the distance between the finger and the first area on the display is less than or equal to the first preset distance, the computing platform may send an instruction to the display, where the instruction may indicate to pop up an interface element, and the first area includes the display area of the one or more interface elements. After the instruction is received, the interface element may be automatically popped up on the display.

It should be understood that the radio transceiver apparatus may send the echo signal to the computing platform in the vehicle, to determine the distance between the finger and the first area by using the computing platform in the vehicle. Alternatively, the computing platform may be located in a cloud server. After obtaining the echo signal, the radio transceiver apparatus may send the echo signal to the cloud server, and the computing platform in the cloud server calculates the distance between the finger and the first area. After obtaining the distance through calculation, the cloud server may send information about the distance to the vehicle. After receiving the distance between the finger and the first area, the vehicle may determine whether to pop up the one or more interface elements.

For another example, when it is detected that the distance between the finger and the second area on the display is less than or equal to the third preset distance, the computing platform may send an instruction to the display, where the instruction may indicate to expand the size of the first interface element, and the second area includes the display area of the first interface element. After the instruction is received, the display may expand the size of the first interface element.

For another example, when it is detected that the distance between the finger and the first area on the display is greater than or equal to the second preset distance, the computing platform may send an instruction to the display, where the instruction may indicate to hide an interface element. After the instruction is received, the interface element may be automatically hidden on the display.

The first preset distance and the second preset distance may be equal or unequal. This is not limited in embodiments of this application.

The computing platform may determine the distance between the finger and the first area based on the signal quality or signal strength of the echo signal. Alternatively, the computing platform may determine the distance between the finger of the user and the first area by performing fast Fourier transform (fast Fourier transform, FFT) on the echo signal.

For example, a process of determining, by using the camera, whether the finger approaches the display is as follows: Like a mounting location of the radio transceiver apparatus, a mounting location of the camera may be at a center of an edge of the display, or the camera may be another camera in the cabin that can sense both a hand of a front-row passenger and the display. The camera captures an image of the front-row passenger (or a back-row passenger) in the cabin in real time. When the camera is the RGB camera or the RGB IR camera, the camera may send captured image information to a computing platform, and the computing platform may perform hand detection on a passenger in the image information. When the hand is detected, a minimum bounding rectangle of the hand is taken, and coordinates of a central pixel of the rectangle and a size of the rectangle are recorded.

When it is detected that the minimum bounding rectangle of the hand is gradually larger or the coordinates of the center of the rectangle gradually approach the display, the computing platform may determine that this process is a process in which the hand approaches the display. When the size of the minimum bounding rectangle is greater than a first size threshold or the distance between the hand and the first area is less than or equal to the first preset distance, the computing platform may send an instruction to the display, where the instruction may indicate to pop up an interface element.

When it is detected that the minimum bounding rectangle of the hand is gradually smaller or the coordinates of the center of the rectangle gradually move away from the display, the computing platform may determine that this process is a process in which the hand moves away from the display. When the size of the minimum bounding rectangle is less than or equal to a second size threshold or the distance between the hand and the first area is greater than or equal to the second preset distance, the computing platform may send an instruction to the display, where the instruction may indicate to hide an interface element.

When the camera is the ToF camera, the ToF camera may send the captured image information to the computing platform. The computing platform may output spatial three-dimensional location coordinates of the hand in a camera coordinate system based on the image information. A location relationship between a camera coordinate system and a display coordinate system may be obtained by using a camera calibration technology or in a mechanical measurement manner. When it is detected that the distance between the finger and the first area is less than or equal to the first preset distance, the computing platform may send an instruction to the display, where the instruction may indicate to pop up an interface element. When it is detected that the distance between the finger and the first area is greater than or equal to the second preset distance, the computing platform may send an instruction to the display, where the instruction may indicate to hide an interface element.

For example, a process of determining, by using the lidar, whether the finger approaches the display is as follows: The lidar sends collected point cloud data to a computing platform. The computing platform may output spatial three-dimensional location coordinates of the hand in a lidar coordinate system based on the point cloud data. A location relationship between a lidar coordinate system and a display coordinate system may be obtained by using a calibration technology or in a mechanical measurement manner. When it is detected that the distance between the finger and the first area is less than or equal to the first preset distance, the computing platform may send an instruction to the display, where the instruction may indicate to pop up an interface element. When it is detected that the distance between the finger and the first area is greater than or equal to the second preset distance, the computing platform may send an instruction to the display, where the instruction may indicate to hide an interface element.

For example, a process of determining, by using the infrared sensing apparatus, whether the finger approaches the display is as follows: The infrared sensing apparatus (including but not limited to the infrared rangefinder or the laser rangefinder) may be arranged at a frame of the display based on a layout location of an interface element. If an interface element is located at a corner of the display, the infrared sensing apparatus is mounted at a corresponding display corner. The infrared sensing apparatus may send a measurement result to a computing platform, and the computing platform may obtain the distance between the hand of the user and the first area based on the measurement result.

For example, a process of determining, by using the ultrasonic wave transceiver apparatus, whether the finger approaches the display is as follows: An ultrasonic wave transceiver apparatus array (including but not limited to the microphone) may be mounted on one side or two sides of a corresponding display frame based on a layout location of an interface element. When sensing a Doppler response of a finger echo, the ultrasonic wave transceiver apparatus may send the Doppler response to a computing platform. The computing platform may determine the distance between the finger and the display based on the Doppler response.

For example, based on data collected by the camera or the eye tracker, the computing platform may determine, by using a gaze estimation (gaze estimation) technology, whether the gaze of the user is in the first area.

It should be understood that, in embodiments of this application, a sensor used to detect whether the finger approaches the display is not limited to the foregoing sensors. When a sensing range of a sensor cannot completely cover a necessary detection area, comprehensive determining may be performed in a manner of multisensor fusion.

For example, whether to pop up the one or more interface elements may be determined based on data collected by the eye tracker and the millimeter-wave radar. When the computing platform determines, based on data collected by the eye tracker, that the gaze of the user is in the first area, and determines, based on data collected by the millimeter-wave radar, that the distance between the finger and the first area is less than or equal to the first preset distance, the computing platform may send an instruction to the display, where the instruction may indicate to pop up an interface element. After the instruction is received, the interface element may be automatically popped up on the display.

For example, whether to pop up the one or more interface elements may be determined based on data collected by the camera and the millimeter-wave radar. When the computing platform determines, based on data collected by the millimeter-wave radar, that a distance between an object and the first area is less than or equal to a sixth preset distance (the sixth preset distance is greater than the first preset distance, for example, the sixth preset distance may be 40 cm), the camera may be controlled to turn on and the camera may be controlled to capture an image of the object.

If the computing platform determines, based on the image captured by the camera, that the object is the hand (for example, the finger) of the user, the computing platform may continue to determine the distance between the finger and the first area based on the data collected by the millimeter-wave radar. When it is detected that the distance between the finger and the first area is less than or equal to the first preset distance, the computing platform may send an instruction to the display, where the instruction may indicate to pop up an interface element. After the instruction is received, the interface element may be automatically popped up on the display.

If the computing platform determines, based on the image captured by the camera, that the object is not the hand of the user (for example, the object is an elbow of the user), the computing platform may stop calculating a distance between the elbow of the user and the first area.

S1903: When it is detected that the hand of the user approaches the display, and/or when it is detected that the gaze of the user is on the display, display the one or more interface elements on the first interface.

In an embodiment, the detecting that the finger of the user approaches the display includes: detecting that the distance between the finger of the user and the first area is less than or equal to the first preset distance.

In an embodiment, the detecting that the gaze of the user is on the display includes: detecting that the gaze of the user is in the first area.

S1904: Determine whether the user taps the one or more interface elements.

If it is detected that the user taps an interface element among the one or more interface elements, S1905 is performed; otherwise, S1906 is performed.

S1905: If it is detected that the user taps the first interface element in the one or more interface elements, perform an operation corresponding to the first interface element.

For example, if the first interface element is associated with a second application, that the operation corresponding to the first interface element is performed includes: switching from displaying the display interface of the first application to displaying a display interface of the second application; or switching from displaying the display interface of the first application to displaying the display interface of the first application and a display interface of the second application.

For example, if the first interface element is associated with an application list, that the operation corresponding to the first interface element is performed includes: displaying the application list on the first interface.

S1906: Determine whether the user taps an area on the first interface other than an area in which the one or more interface elements are located.

If it is detected that the user taps the area on the first interface other than the area in which the one or more interface elements are located, S1908 is performed; otherwise, S1903 is performed.

In this embodiment of this application, determining in S1907 may be further performed when determining in S1904 is performed.

S1907: Determine whether the hand of the user is away from the display, and/or determine whether the gaze of the user is not on the display.

In an embodiment, when the hand of the user approaches the display in S1902, the one or more interface elements are displayed on the first interface. When the hand of the user is away from the display in S1907, S1908 is performed; otherwise, S1903 is performed.

In an embodiment, in S1902, when the gaze of the user is on the display, the one or more interface elements are displayed on the first interface. In S1907, when the gaze of the user is not on the display, or when the gaze of the user is on the display, but no operation performed by the user on the one or more interface elements is detected within preset duration, S1908 is performed; otherwise, S1903 is performed.

In an embodiment, in S 1902, when it is determined that the hand of the user approaches the display and the gaze of the user is on the display, the one or more interface elements are displayed on the first interface. In S1907, when the hand of the user is away from the display and/or the gaze of the user is not on the display, S 1908 is performed; otherwise, S1903 is performed.

In an embodiment, that whether the hand of the user is away from the display is determined includes: determining whether the distance between the finger of the user and the first area on the display is greater than or equal to the second preset distance.

In an embodiment, that whether the gaze of the user is not on the display is determined includes: determining whether the gaze of the user is not in the first area.

It should be understood that for a process of determining whether the finger of the user is away from the display and a process of determining whether the gaze of the user is not on the display in S 1907, refer to description in S 1902. For brevity, details are not described herein again.

S1908: Hide the one or more interface elements on the first interface.

In embodiments of this application, when the user needs to operate the one or more interface elements, the hand may approach the first area on the display and/or the gaze may be in the first area, so that the one or more interface elements are displayed on the first interface, and the user can conveniently operate the one or more interface elements. When the user does not need to operate the one or more interface elements, the hand may be away from the first area, so that the one or more interface elements may be hidden on the display, to prevent the interface elements from blocking content displayed on the first interface, and further the user can view more display content on the first interface. In this way, the one or more interface elements can be displayed or hidden on the display based on a requirement of the user, to help improve human-machine interaction experience of the user.

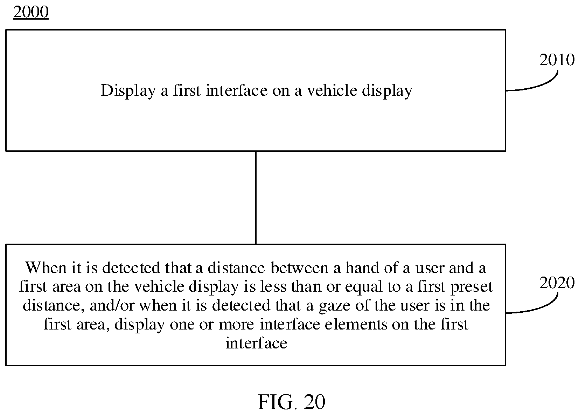

FIG. 20 is a schematic flowchart of a display method 2000 according to an embodiment of this application. As shown in FIG. 20, the method includes the following steps.

S2010: Display a first interface on a vehicle display.

For example, the first interface may be a home screen.

It should be understood that the home screen may be a home screen of the vehicle display, or the home screen may be a display interface of a wallpaper or an animation.

For example, the first interface may be a display interface of a first application. For example, as shown in FIG. 3(a), the first application may be a navigation application.

Optionally, if the first interface is the display interface of the first application, the method further includes: in response to displaying the display interface of the first application, enabling an automatic interface element control function, where when the automatic interface element control function is enabled and a distance between a hand of a user and a first area on the vehicle display is less than or equal to a first preset distance, one or more interface elements can be displayed on the vehicle display. In this way, the automatic interface element control function may be enabled or disabled based on different scenarios, and the user does not need to manually enable or disable the function. This helps improve automation of a vehicle.

S2020: When it is detected that the distance between the hand of the user and the first area on the vehicle display is less than or equal to the first preset distance, and/or when it is detected that a gaze of the user is in the first area, display the one or more interface elements on the first interface, where the first interface includes the first area, and the first area includes a display area of the one or more interface elements.

In the method 2000, the vehicle display in the vehicle is used as an example for description. Embodiments of this application are not limited thereto. For example, the display may alternatively be a display of another terminal device (for example, a mobile phone, a tablet, a personal computer (personal computer, PC), or a watch). For example, the method includes: displaying a video playback interface on the display of the terminal device; and when it is detected that the distance between the hand of the user and the first area on the display is less than or equal to the first preset distance, and/or when it is detected that the gaze of the user is in the first area, displaying the one or more interface elements on the video playback interface, where the video playback interface includes the first area, and the first area includes the display area of the one or more interface elements. In an embodiment, the one or more interface elements include but are not limited to one or more of a pause/play control, a progress bar, a control for switching to playing a previous video, and a control for switching to playing a next video.

It should be understood that the foregoing description is provided by using an example in which the video playback interface is displayed. Embodiments of this application are not limited thereto.

For example, a picture browsing interface may alternatively be displayed on the display. When it is detected that the distance between the hand of the user and the first area is less than or equal to a preset distance, and/or when it is detected that the gaze of the user is in the first area, the one or more interface elements may be displayed on the picture browsing interface, where the picture browsing interface includes the first area, and the first area includes the display area of the one or more interface elements. In an embodiment, the one or more interface elements include but are not limited to one or more of an image editing control, an image detail display control (the control may be used to trigger display of information such as photographing time and a photographing location of an image), a sharing control, a like control, and a deletion control.

For another example, a call screen may alternatively be displayed on the display. When it is detected that the distance between the hand of the user and the first area is less than or equal to a preset distance, and/or when it is detected that the gaze of the user is in the first area, the one or more interface elements may be displayed on the call screen, where the call screen includes the first area, and the first area includes the display area of the one or more interface elements. In an embodiment, the one or more interface elements include but are not limited to one or more of a background blur control, a hang-up control, a microphone on/off control, and a speaker on/off control.

Optionally, the first area may be a display area of the first interface; the first area may be the display area of the one or more interface elements, for example, the first area may be a display area of the widgets 203 to 206 in FIG. 2; if the one or more interface elements are the widgets 203 to 206 in FIG. 2, the first area may be the area 2 shown in FIG. 3(c); or in consideration of an error during detection of the first area, the first area may be an area larger than the area 2. For example, the first area may be an area obtained after the area 2 is expanded by a preset multiple (for example, 1.1 times). For another example, the first area may be an area obtained after the area 2 separately extends outward by 2 cm in a height direction and a width direction.

For example, as shown in FIG. 3(b), when it is detected that a distance between a finger of the user and the first area is less than or equal to the first preset distance, the widgets 203 to 206 may be automatically popped up on a display interface of the navigation application.

For example, as shown in FIG. 11(b), when it is detected that the distance between a finger of the user and the first area is less than or equal to the first preset distance, icons of a game application, a weather application, and a music application may be automatically popped up on a display interface of the navigation application.

Optionally, the method further includes: when it is detected that the distance between the hand of the user and the first area is greater than or equal to a second preset distance, hiding the one or more interface elements on the first interface.

For example, as shown in FIG. 4(b), when it is detected that the distance between the finger of the user and the first area is greater than or equal to the second preset distance, the widgets 203 to 206 may be hidden on the display interface of the navigation application.

Optionally, displaying the one or more interface elements on the first interface includes: when it is detected that the hand of the user approaches the vehicle display from a first side of the vehicle display, displaying the one or more interface elements in an area close to the first side on the first interface.

For example, as shown in FIG. 10(b), when it is detected that the hand of the user approaches the display from a right side of the display, the widgets 203 to 206 may be displayed on a right side of the display interface of the navigation application. This helps the user operate the one or more interface elements more conveniently, and helps improve human-machine interaction experience of the user.

Optionally, the method further includes: when it is detected that a distance between the hand of the user and a second area on the vehicle display is less than or equal to a third preset distance, expanding a size of a first interface element from a first size to a second size, where the one or more interface elements include the first interface element, the first interface includes the second area, and the second area includes a display area of the first interface element.

Optionally, the second area may be the display area of the first interface; the second area may be the display area of the first interface element; the second area may be an area obtained after the display area of the first interface element is expanded by a specific multiple; or the widget 204 shown in FIG. 9(b) is used as an example, and the second area may be an area obtained after the widget 204 is separately extended outward by 1 cm in a height direction and a width direction.

For example, as shown in FIG. 9(b), when it is detected that a distance between the finger of the user and the second area on the display is less than or equal to the third preset distance, a size of the widget 204 may be enlarged from the first size to the second size, and the second area includes a display area of the widget 204. In this way, the user can operate the widget 204 more conveniently and accurately. This helps avoid an accidental touch performed by the user on another widget due to a small size of a widget or an excessively short distance between widgets. This helps improve human-machine interaction experience of the user.

Optionally, when the one or more interface elements are displayed on the first interface in row, the expanding a size of a first interface element from a first size to a second size includes: expanding a height of the first interface element from a first height to a second height. A width of the first interface element may remain unchanged, or an enlargement multiple of the width of the first interface element may be less than an enlargement multiple of the height of the first interface element. This helps ensure that after the size of the first interface element is expanded, the one or more interface elements may still be completely displayed on the first interface.

Optionally, when the one or more interface elements are displayed on the first interface in column, the expanding a size of a first interface element from a first size to a second size includes: expanding a width of the first interface element from a first width to a second width. A height of the first interface element may remain unchanged, or an enlargement multiple of the height of the first interface element may be less than an enlargement multiple of the width of the first interface element. This helps ensure that after the size of the first interface element is expanded, the one or more interface elements may still be completely displayed on the first interface.

Optionally, the first interface includes a floating icon, the floating icon is associated with one or more applications, and displaying the one or more interface elements on the first interface includes: displaying icons of the one or more applications on the first interface.

For example, as shown in FIG. 11(a), the floating icon may be the icon 1101. When it is detected that the distance between the finger of the user and the first area on the display is less than or equal to the first preset distance and/or the gaze of the user is in the first area, the application list 1102 may be automatically popped up on the display, where the application list 1102 includes the icons of the plurality of applications associated with the floating icon.

Optionally, the one or more interface elements include a second interface element associated with a second application, and the method further includes: displaying the display interface of the first application and a display interface of the second application on the vehicle display when an operation of tapping the second interface element by the user is detected.

Optionally, the displaying the display interface of the first application and a display interface of the second application on the vehicle display when an operation of tapping the second interface element by the user is detected includes: when an operation of tapping the second interface element by a user located on a second side of the vehicle display is detected, displaying the display interface of the second application in a third area on the vehicle display, and displaying the display interface of the first application in a fourth area on the vehicle display, where the third area is an area close to the second side, and the fourth area is an area away from the second side.

For example, as shown in FIG. 7(b), when the vehicle detects an operation of tapping the widget 204 by the user in a driver area, the vehicle may display, on the display, a display interface of a newly started in-vehicle music application on a side (for example, the area 701) close to the driver area, and display a navigation interface of a previously started in-vehicle map application on a side (for example, the area 702) away from the driver area.

The foregoing display method may be automatically initiated. For example, the display method is automatically initiated after the user starts the vehicle, turns on the vehicle display, or opens the first application. Alternatively, a choice is provided for the user, that is, when the user chooses to initiate the method, the foregoing display method is initiated. For example, a function for implementing the display method is referred to as an automatic interface element control function (for example, a function of automatically popping up or hiding an interface element). When it is detected that the user enables the function, the display method in the foregoing or the following embodiments is performed. Alternatively, when some specific applications are displayed on the vehicle display, the display method is initiated. For example, when the display interface of the navigation application is displayed on the vehicle display, the display method in the foregoing or the following embodiments is performed; and when a display interface of another application (for example, the music application) other than the navigation application is displayed on the vehicle display, the display method may not be performed. The specific applications described above may be one or more default applications when the vehicle is delivered from a factory, or may be one or more applications selected by the user. A name of the function of automatically popping up or hiding an interface element is merely an example, which indicates a control manner of displaying and/or hiding an interface element.

For example, the method further includes: detecting that the user enables the automatic interface element control function, where when the automatic interface element control function is enabled and a distance between the hand of the user and the vehicle display is less than or equal to the first preset distance, the one or more interface elements are displayed on the vehicle display.

For example, as shown in FIG. 18(c), when detecting an operation of sliding a control 1802 from a left side to a right side by the user, the vehicle may enable a function of automatically popping up or hiding a widget.

Optionally, displaying the one or more interface elements on the first interface includes: when a gesture of the user is detected, displaying the one or more interface elements corresponding to the gesture.

For example, as shown in FIG. 16(a) and FIG. 16(b), different widgets may be displayed on the display by detecting different air gestures. When it is detected that the user approaches the display in an OK gesture, the widget 206 may be automatically popped up on the display. When it is detected that the user approaches the display in a V gesture, the widget 204 may be automatically popped up on the display.

Optionally, that the first interface is displayed on the vehicle display includes: displaying the first interface and a second interface on the vehicle display, and the method further includes: when it is detected that a distance between the hand of the user and a fifth area on the vehicle display is less than or equal to the first preset distance, and/or when it is detected that the gaze of the user is in the fifth area, displaying the one or more interface elements on the second interface, where the second interface includes the fifth area, and the fifth area includes a display area of the one or more interface elements.

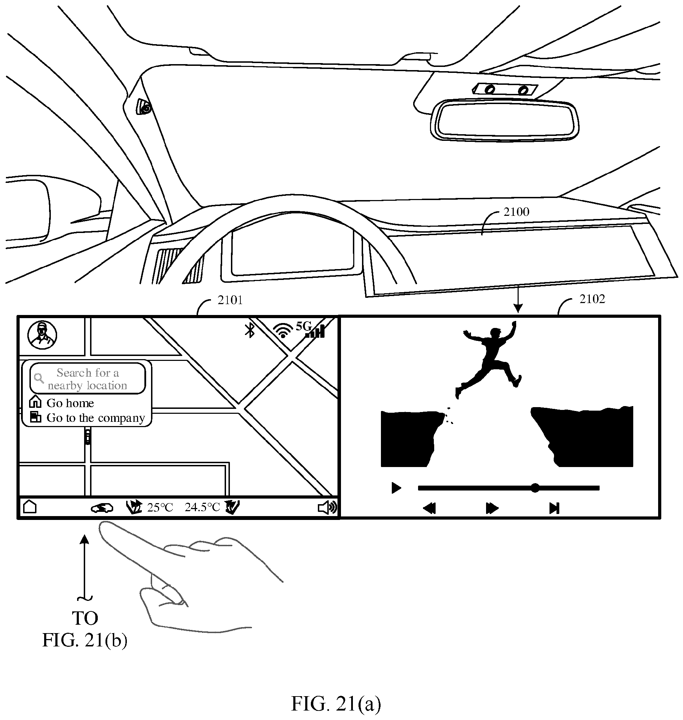

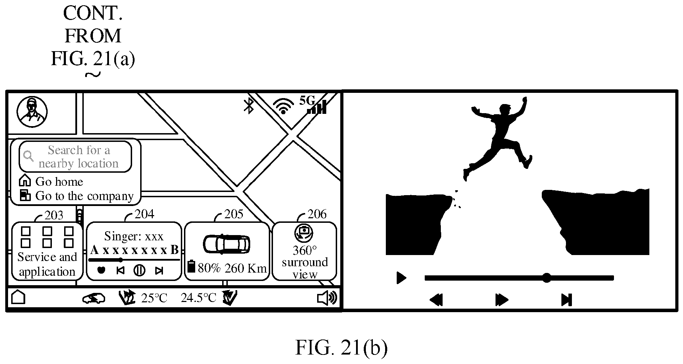

Technical solutions in embodiments of this application may be further applied to a scenario in which the vehicle display is a long screen (or may be referred to as a long connected screen). FIG. 21(a) and FIG. 21(b) show another group of GUIs according to an embodiment of this application.

As shown in FIG. 21(a), a central control screen and a co-driver screen in a vehicle cabin may be a same screen 2100. The screen 2100 may be divided into two display areas: an area 2101 and an area 2102. The area 2101 may be a display area close to a driver user, and the area 2102 is a display area close to a co-driver area. A display interface of a navigation application may be displayed in the area 2101, and a video playback interface of a video application may be displayed in the area 2102. When detecting that a distance between a finger of a user and a first area is less than or equal to a first preset distance, a vehicle may display, on a display, a GUI shown in FIG. 21(b). In this case, the first area may be the area 2101, or the area 2101 may be divided into an area 1 and an area 2 as shown in FIG. 3(c). The first area may be the area 2 in the area 2101, or the first area may be an area larger than the area 2 in the area 2101 (for example, the first area may be an area obtained after the area 2 in the area 2101 is enlarged by 1.1 times).

As shown in FIG. 21(b), the vehicle may display the widgets 203 to 206 in the area 2101. In this case, the area 2102 may continue to display the video playback interface.

In an embodiment, when detecting that a distance between the finger of the user and a fifth area is less than or equal to the first preset distance, the vehicle may display the widgets 203 to 206 in the area 2102. In this case, the fifth area may be the area 2102, or the area 2102 may be divided into an area 1 and an area 2 as shown in FIG. 3(c). The fifth area may be the area 2 in the area 2102, or the fifth area may be an area larger than the area 2 in the area 2102 (for example, the fifth area may be an area obtained after the area 2 in the area 2102 is enlarged by 1.1 times).

Same interface elements (for example, the widgets 203 to 206) may be automatically popped up in the area 2101 and the area 2102 after it is detected that a hand of the user approaches a corresponding area. In embodiments of this application, different interface elements may alternatively be displayed in the area 2101 and the area 2102 after it is detected that the hand of the user approaches a corresponding area.

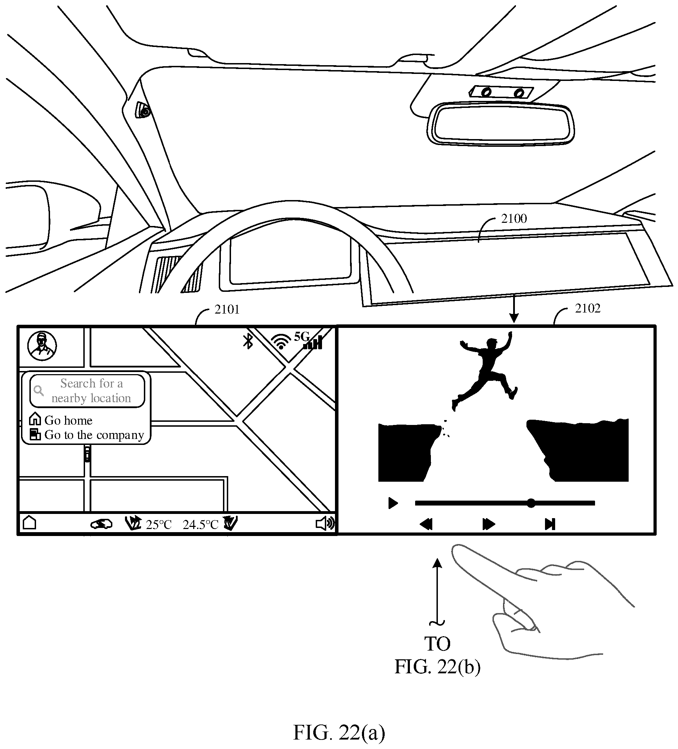

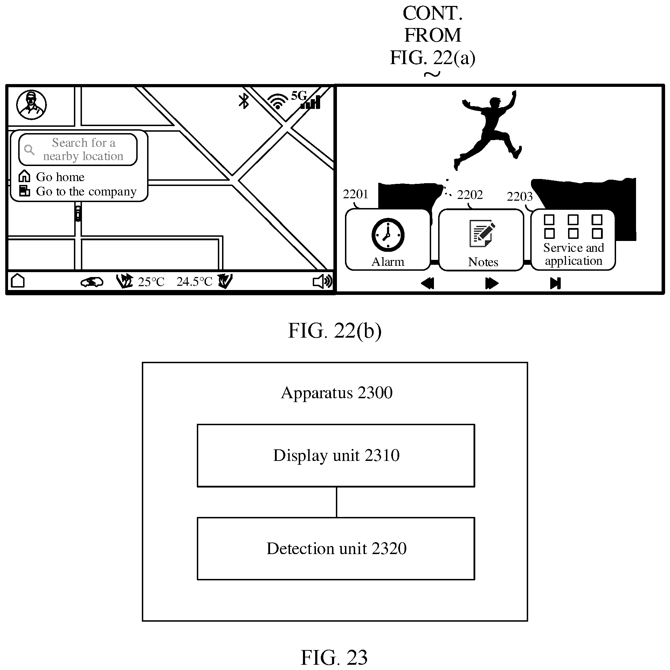

FIG. 22(a) and FIG. 22(b) show another group of GUIs according to an embodiment of this application.

As shown in FIG. 22(a), when detecting that a distance between a finger of a user and a fifth area is less than or equal to a first preset distance, a vehicle may display, on a display, a GUI shown in FIG. 22(b). In this case, the fifth area may be an area 2102, or the area 2102 may be divided into an area 1 and an area 2 as shown in FIG. 3(c). The fifth area may be the area 2 in the area 2102, or the fifth area may be an area larger than the area 2 in the area 2102 (for example, the fifth area may be an area obtained after the area 2 in the area 2102 is enlarged by 1.1 times).

As shown in FIG. 22(b), in response to detecting that the distance between the finger of the user and the fifth area is less than or equal to the first preset distance, the vehicle may display widgets 2201 to 2203 in the area 2102.

Optionally, when the widgets 2201 to 2203 are displayed in the area 2102, video content displayed on a video playback interface may be in a pause state. When it is detected that the distance between the finger of the user and the fifth area is greater than or equal to a second preset distance, the widgets 2201 to 2203 may be automatically hidden, and the video content may be automatically switched from in the pause state to in a play state.

In embodiments of this application, interface elements (for example, the widgets 203 to 206) displayed in the area 2101 and interface elements (for example, the widgets 2201 to 2203) displayed in the area 2102 may be set by the user based on a requirement, or may be set when the vehicle is delivered from a factory.

Optionally, the foregoing one or more interface elements include a widget and/or an icon of an application.

Optionally, the method further includes: when an operation of tapping a sixth area by the finger of the user is detected, hiding the one or more interface elements on a first interface, where the sixth area is an area on the first interface other than the first area.

For example, as shown in FIG. 5(b), when a tap operation performed by the user in the area 1 is detected, the widgets 203 to 206 may be hidden on a display interface of a navigation application.

An embodiment of this application further provides an apparatus for implementing any one of the foregoing methods, for example, an apparatus includes units (or means) configured to implement steps performed by a vehicle or a system including a sensor, a computing platform, and a display in any one of the foregoing methods.

For example, FIG. 23 is a diagram of a display apparatus 2300 according to an embodiment of this application. The apparatus includes a display unit 2310 and a detection unit 2320. The display unit 2310 is configured to display a first interface. The display unit 2310 is further configured to: when the detection unit 2320 detects that a distance between a hand of a user and a first area of the display unit 2310 is less than or equal to a first preset distance, and/or when the detection unit 2320 detects that a gaze of the user is in the first area, display one or more interface elements on the first interface, where the first interface includes the first area, and the first area includes a display area of the one or more interface elements.

Optionally, the display unit 2310 is further configured to: when the detection unit 2320 detects that the distance between the hand of the user and the first area is greater than or equal to a second preset distance, hide the one or more interface elements on the first interface.

Optionally, the display unit 2310 is specifically configured to: when the detection unit 2320 detects that the hand of the user approaches the display unit 2310 from a first side of the display unit 2310, display the one or more interface elements in an area close to the first side on the first interface.

Optionally, the display unit 2310 is further configured to: when the detection unit 2320 detects that a distance between the hand of the user and a second area of the display unit 2310 is less than or equal to a third preset distance, expand a size of a first interface element from a first size to a second size, where the one or more interface elements include the first interface element, the first interface includes the second area, and the second area includes a display area of the first interface element.

Optionally, the first interface includes a floating icon, the floating icon is associated with one or more applications, and the display unit 2310 is specifically configured to display icons of the one or more applications on the first interface.

Optionally, the first interface is a display interface of a first application.

Optionally, the first application includes a navigation application, a video application, a music application, or the like.

Optionally, the one or more interface elements include a second interface element associated with a second application, and the display unit 2310 is further configured to: when the detection unit 2320 detects an operation of tapping the second interface element by the user, display the display interface of the first application and a display interface of the second application.

Optionally, the display unit 2310 is specifically configured to: when the detection unit 2320 detects an operation of tapping the second interface element by a user located on a second side of the display unit 2310, display the display interface of the second application in a third area, and display the display interface of the first application in a fourth area, where the third area is an area close to the second side, and the fourth area is an area away from the second side.

Optionally, the detection unit 2320 is further configured to detect that the user enables an automatic interface element control function, where when the automatic interface element control function is enabled and a distance between the hand of the user and the display unit 2310 is less than or equal to the first preset distance, the display unit 2310 can display the one or more interface elements.

Optionally, the display unit 2310 is specifically configured to: when the detection unit 2320 detects a gesture of the user, display the one or more interface elements corresponding to the gesture.

Optionally, the display unit 2310 is specifically configured to display the first interface and a second interface. The display unit 2310 is further configured to: when the detection unit 2320 detects that a distance between the hand of the user and a fifth area of the display unit 2310 is less than or equal to the first preset distance, and/or when the detection unit 2320 detects that the gaze of the user is in the fifth area, display the one or more interface elements on the second interface, where the second interface includes the fifth area, and the fifth area includes a display area of the one or more interface elements.

Optionally, the foregoing one or more interface elements include a widget and/or an icon of an application.

Optionally, the display unit 2310 is further configured to: when the detection unit 2320 detects an operation of tapping a sixth area by a finger of the user, hide the one or more interface elements on the first interface, where the sixth area is an area on the first interface other than the first area.

It should be understood that division of the units in the foregoing apparatus is merely logical function division. During an actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement the functions of some or all of the units. All the units of the apparatus may be implemented in a form of software invoked by the processor, or may be implemented in a form of hardware circuit, or some of the units are implemented in a form of software invoked by the processor, and remaining units are implemented in a form of hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by using an ASIC or a PLD, for example, an FPGA. In a reconfigurable hardware circuit, a process in which the processor loads a configuration document to implement hardware circuit configuration may be understood as a process in which the processor loads instructions to implement functions of some or all of the units. In addition, the circuit may be a hardware circuit designed for artificial intelligence, and may be understood as an ASIC, for example, an NPU, a TPU, or a DPU.

It can be learned that the units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of system-on-a-chip (system-on-a-chip, SOC). The SOC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in a vehicle, the processing unit may be the processors 151 to 15n shown in FIG. 1.

An embodiment of this application further provides a transportation means. The transportation means may include the display apparatus 2300.

Optionally, the transportation means may be a vehicle.

An embodiment of this application further provides a computer program product. The computer program product includes computer program code, and when the computer program code is run on a computer, the computer is enabled to perform the foregoing method.

An embodiment of this application further provides a computer-readable medium. The computer-readable medium stores program code, and when the computer program code is run on a computer, the computer is enabled to perform the foregoing method.

In an implementation process, the steps in the foregoing methods may be implemented by using a hardware integrated logical circuit in the processor, or by using instructions in a form of software. The method disclosed with reference to embodiments of this application may be directly performed by using a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, comprising:
displaying a first interface on a vehicle display; and
when it is detected that a distance between a hand of a user and a first area on the vehicle display is less than or equal to a first preset distance, and/or when it is detected that a gaze of the user is in the first area, displaying one or more interface elements on the first interface, wherein
the first interface comprises the first area, and the first area comprises a display area of the one or more interface elements.

2. The method according to claim 1, wherein the method further comprises:
when it is detected that the distance between the hand of the user and the first area is greater than or equal to a second preset distance, hiding the one or more interface elements on the first interface.

3. The method according to claim 1 or 2, wherein the displaying one or more interface elements on the first interface comprises:
when it is detected that the hand of the user approaches the vehicle display from a first side of the vehicle display, displaying the one or more interface elements in an area that is on the first interface and that is close to the first side.

4. The method according to any one of claims 1 to 3, wherein the method further comprises:
when it is detected that a distance between the hand of the user and a second area on the vehicle display is less than or equal to a third preset distance, expanding a size of a first interface element from a first size to a second size, wherein
the one or more interface elements comprise the first interface element, the first interface comprises the second area, and the second area comprises a display area of the first interface element.

5. The method according to any one of claims 1 to 4, wherein the first interface comprises a floating icon, the floating icon is associated with one or more applications, and the displaying one or more interface elements on the first interface comprises:
displaying icons of the one or more applications on the first interface.

6. The method according to any one of claims 1 to 5, wherein the first interface is a display interface of a first application.

7. The method according to claim 6, wherein the first application comprises a navigation application.

8. The method according to claim 6 or 7, wherein the one or more interface elements comprise a second interface element associated with a second application, and the method further comprises:
displaying the display interface of the first application and a display interface of the second application on the vehicle display when an operation of tapping the second interface element by the user is detected.

9. The method according to claim 8, wherein the displaying the display interface of the first application and a display interface of the second application on the vehicle display when an operation of tapping the second interface element by the user is detected comprises:
when an operation of tapping the second interface element by a user located on a second side of the vehicle display is detected, displaying the display interface of the second application in a third area on the vehicle display, and displaying the display interface of the first application in a fourth area on the vehicle display, wherein
the third area is an area close to the second side, and the fourth area is an area away from the second side.

10. The method according to any one of claims 1 to 9, wherein the displaying one or more interface elements on the first interface comprises:
when a gesture of the user is detected, displaying the one or more interface elements corresponding to the gesture.

11. The method according to any one of claims 1 to 10, wherein the displaying a first interface on a vehicle display comprises:
displaying the first interface and a second interface on the vehicle display; and
the method further comprises:
when it is detected that a distance between the hand of the user and a fifth area on the vehicle display is less than or equal to the first preset distance, and/or when it is detected that the gaze of the user is in the fifth area, displaying the one or more interface elements on the second interface, wherein
the second interface comprises the fifth area, and the fifth area comprises a display area of the one or more interface elements.

12. The method according to any one of claims 1 to 11, wherein the one or more interface elements comprise a widget and/or an icon of an application.

13. The method according to claim 1, wherein the method further comprises:
when an operation of tapping a sixth area by a finger of the user is detected, hiding the one or more interface elements on the first interface, wherein the sixth area is an area on the first interface other than the first area.

14. The method according to any one of claims 1 to 13, wherein the method further comprises:
detecting that the user enables an automatic interface element control function, wherein when the automatic interface element control function is enabled, the steps according to any one of claims 1 to 13 are performed.

15. A display apparatus, wherein the display apparatus is located in a vehicle, and the display apparatus comprises a display unit and a detection unit, wherein
the display unit is configured to display a first interface; and
the display unit is further configured to: when the detection unit detects that a distance between a hand of a user and a first area of the display unit is less than or equal to a first preset distance, and/or when the detection unit detects that a gaze of the user is in the first area, display one or more interface elements on the first interface, wherein
the first interface comprises the first area, and the first area comprises a display area of the one or more interface elements.

16. The apparatus according to claim 15, wherein
the display unit is further configured to: when the detection unit detects that the distance between the hand of the user and the first area is greater than or equal to a second preset distance, hide the one or more interface elements on the first interface.

17. The apparatus according to claim 15 or 16, wherein the display unit is specifically configured to:
when the detection unit detects that the hand of the user approaches the display unit from a first side of the display unit, display the one or more interface elements in an area that is on the first interface and that is close to the first side.

18. The apparatus according to any one of claims 15 to 17, wherein
the display unit is further configured to: when the detection unit detects that a distance between the hand of the user and a second area of the display unit is less than or equal to a third preset distance, expand a size of a first interface element from a first size to a second size, wherein
the one or more interface elements comprise the first interface element, the first interface comprises the second area, and the second area comprises a display area of the first interface element.

19. The apparatus according to any one of claims 15 to 18, wherein the first interface comprises a floating icon, the floating icon is associated with one or more applications, and the display unit is specifically configured to:
display icons of the one or more applications on the first interface.

20. The apparatus according to any one of claims 15 to 19, wherein the first interface is a display interface of a first application.

21. The apparatus according to claim 20, wherein the first application comprises a navigation application.

22. The apparatus according to claim 20 or 21, wherein the one or more interface elements comprise a second interface element associated with a second application, and the display unit is further configured to:
display the display interface of the first application and a display interface of the second application when the detection unit detects an operation of tapping the second interface element by the user.

23. The apparatus according to claim 22, wherein the display unit is specifically configured to:
when the detection unit detects an operation of tapping the second interface element by a user located on a second side of the display unit, display the display interface of the second application in a third area, and display the display interface of the first application in a fourth area, wherein
the third area is an area close to the second side, and the fourth area is an area away from the second side.

24. The apparatus according to any one of claims 15 to 23, wherein the display unit is specifically configured to:
when the detection unit detects a gesture of the user, display the one or more interface elements corresponding to the gesture.

25. The apparatus according to any one of claims 15 to 24, wherein the display unit is specifically configured to display the first interface and a second interface, wherein
the display unit is further configured to: when the detection unit detects that a distance between the hand of the user and a fifth area of the display unit is less than or equal to the first preset distance, and/or when the detection unit detects that the gaze of the user is in the fifth area, display the one or more interface elements on the second interface, wherein
the second interface comprises the fifth area, and the fifth area comprises a display area of the one or more interface elements.

26. The apparatus according to any one of claims 15 to 25, wherein the one or more interface elements comprise a widget and/or an icon of an application.

27. The apparatus according to claim 15, wherein
the display unit is further configured to: when the detection unit detects an operation of tapping a sixth area by a finger of the user, hide the one or more interface elements on the first interface, wherein the sixth area is an area on the first interface other than the first area.

28. The apparatus according to any one of claims 15 to 27, wherein
the detection unit is further configured to detect that the user enables an automatic interface element control function, wherein when the automatic interface element control function is enabled and the distance between the hand of the user and the first area is less than or equal to the first preset distance, the display unit displays the one or more interface elements.

29. A control apparatus, wherein the apparatus comprises at least one processor and an interface circuit, and the processor communicates with a display apparatus through the interface circuit; and
the at least one processor is configured to: perform the method according to any one of claims 1 to 14, and control a display interface of the display apparatus.

30. A vehicle, comprising the apparatus according to any one of claims 15 to 29.

31. A computer-readable storage medium, wherein the computer-readable storage medium stores a computer program, and when the computer program is executed by a computer, the method according to any one of claims 1 to 14 is implemented.

32. A chip, wherein the chip comprises a processor and a data interface, and the processor reads, through the data interface, instructions stored in a memory, to perform the method according to any one of claims 1 to 14.
